# EUROPEAN PATENT APPLICATION

(11) **EP 3 407 645 A1**
(43) Date of publication of application: **28.11.2018**
(21) Application number: 17741650.0
(22) Date of filing: 18.01.2017
(51) Int. Cl.: H04W 48/06, H04W 28/08, H04W 8/20, H04W 74/08

(54) **METHOD FOR CONTROLLING CONGESTION IN WIRELESS COMMUNICATION SYSTEM AND DEVICE FOR SAME**

(30) Priority: 18.01.2016 US 201662280096 P; 24.04.2016 US 201662326804 P; 19.05.2016 US 201662339068 P
(71) Applicant: LG Electronics Inc., Seoul 07336 (KR)
(72) Inventor: RYU, Jinsook, Seoul 06772 (KR); KIM, Hyunsook, Seoul 06772 (KR); KIM, Jaehyun, Seoul 06772 (KR)
(74) Representative: Katérle, Axel
(86) International application number: PCT/KR2017/000607
(87) International publication number: WO 2017/126884

(57) **Abstract**

Disclosed are a method for controlling a congestion in a wireless communication system and a device for same. More particularly, a method for executing a congestion control by a network node in a wireless communication system can comprise the steps of: detecting the congestion of one or more dedicated core networks (DCN) served by the network node; receiving a non-access stratum (NAS) request message from user equipment (UE); obtaining subscription information, which includes a UE usage type of the UE, from a home subscriber server (HSS); selecting a DCN for serving the UE based on the UE usage type; and, when the DCN for serving the UE is a DCN of which the congestion has been detected, transmitting to the UE a NAS reject message, which includes a backoff timer of the selected DCN, as a response to the NAS request message.

## Description

### [Technical Field]

The present invention relates to a wireless communication system and, more particularly, to a method for individually performing/supporting congestion control with respect to dedicated core networks (DCNs) when congestion occurs in a core network supporting one or more DCNs and an apparatus supporting the same.

### [Background Art]

Mobile communication systems have been developed to provide voice services, while guaranteeing user activity. Service coverage of mobile communication systems, however, has extended even to data services, as well as voice services, and currently, an explosive increase in traffic has resulted in shortage of resource and user demand for a high speed services, requiring advanced mobile communication systems.

The requirements of the next-generation mobile communication system may include supporting huge data traffic, a remarkable increase in the transfer rate of each user, the accommodation of a significantly increased number of connection devices, very low end-to-end latency, and high energy efficiency. To this end, various techniques, such as small cell enhancement, dual connectivity, massive Multiple Input Multiple Output (MIMO), in-band full duplex, non-orthogonal multiple access (NOMA), supporting super-wide band, and device networking, have been researched.

### [Disclosure]

### [Technical Problem]

An object of the present invention is to propose a method for individually performing/supporting congestion control with respect to DCNs when a congestion of a core network supporting one or more DCNs occurs.

Specifically, an object of the present invention is to propose a method for independently performing/supporting non-access stratum (NAS) level/radio access network (RAN) level congestion control for each DCN (or for each DCN and access point name (APN).

It will be appreciated by persons skilled in the art that the objects that could be achieved with the present invention are not limited to what has been particularly described hereinabove and the above and other objects that the present invention could achieve will be more clearly understood from the following detailed description.

### [Technical Solution]

In an aspect of the present invention, a method for a network node to perform congestion control in a wireless communication system may include detecting the congestion of one or more dedicated core networks (DCNs) served by the network node, receiving a non-access stratum (NAS) request message from a user equipment (UE), obtaining subscription information including a UE usage type of the UE from a home subscriber server (HSS), selecting a DCN serving the UE based on the UE usage type, and transmitting a NAS reject message including a backoff timer of the selected DCN to the UE as a response to the NAS request message when the DCN serving the UE is a DCN whose congestion has been detected.

In another aspect of the present invention, a network node for performing congestion control in a wireless communication system includes a communication module for transmitting/receiving a signal and a processor controlling the communication module. The processor may be configured to detect the congestion of one or more dedicated core networks (DCNs) served by the network node, receive a non-access stratum (NAS) request message from a user equipment (UE), obtain subscription information including a UE usage type of the UE from a home subscriber server (HSS), select a DCN serving the UE based on the UE usage type, and transmit a NAS reject message including a backoff timer of the selected DCN to the UE as a response to the NAS request message when the DCN serving the UE is a DCN whose congestion has been detected.

Preferably, when a plurality of DCNs is served by the network node, the backoff timer may be independently determined for each DCN.

Preferably, when the congestion situation is detected for each APN connected to the DCN and when a DCN and an APN serving the UE are a DCN and an APN in which a congestion situation has been detected, the backoff timer of the DCN and the APN serving the UE may be transmitted to the UE.

Preferably, a detach request message including the backoff timer of the DCN and the APN serving the UE may be transmitted to the UE when the UE is connected to an APN through a DCN and when the DCN and the APN serving the UE are a DCN and an APN in which the congestion situation has been detected.

Preferably, the NAS Reject message may include a different rejection cause for each DCN and APN or may include a common rejection cause used for all of DCNs and APNs.

Preferably, any NAS request message for the DCN serving the UE may not be transmitted by the UE until the backoff timer expires.

Preferably, when a NAS request message for a DCN serving the UE is received from the UE before the backoff timer expires, the NAS reject message may be immediately transmitted.

Preferably, the NAS request message may include a session management request message and/or a mobility management request message.

### [Advantageous Effects]

In accordance with an embodiment of the present invention, congestion control may be independently performed for each specific DCN (or DCN and APN) in which congestion has occurred.

In accordance with an embodiment of the present invention, congestion control may not be applied to the DCN (or DCN and APN) for which congestion control is unnecessary because congestion control may be independently performed for each specific DCN (or DCN and APN) in which congestion has occurred.

In accordance with an embodiment of the present invention, the delay of the transmission/reception of data/signaling and an unnecessary procedure can be prevented because congestion control may not be applied to DCN (or DCN and APN) for which congestion control is unnecessary.

It will be appreciated by persons skilled in the art that the effects that can be achieved with the present invention are not limited to what has been particularly described hereinabove and other advantages of the present invention will be more clearly understood from the following detailed description.

### [Description of Drawings]

The accompanying drawings, which are included to provide a further understanding of the present invention and constitute a part of specifications of the present invention, illustrate embodiments of the present invention and together with the corresponding descriptions serve to explain the principles of the present invention.
FIG. 1 is a diagram schematically exemplifying an evolved packet system (EPS) to which the present invention can be applied.
FIG. 2 illustrates an example of evolved universal terrestrial radio access network structure to which the present invention can be applied.
FIG. 3 exemplifies a structure of E-UTRAN and EPC in a wireless communication system to which the present invention can be applied.
FIG. 4 illustrates a structure of a radio interface protocol between a UE and E-UTRAN in a wireless communication system to which the present invention can be applied.
FIG. 5 is a diagram schematically showing a structure of a physical channel in a wireless communication system to which the present invention may be applied.
FIG. 6 is a diagram for describing a contention based random access procedure in a wireless communication system to which the present invention may be applied.
FIG. 7 is a diagram illustrating machine-type communication (MTC) architecture in a wireless communication system to which the present invention may be applied.
FIG. 8 illustrates architecture for service capability exposure in a wireless communication system to which the present invention may be applied.
FIG. 9 is a diagram illustrating an RRC connection setup procedure in a wireless communication system to which the present invention may be applied.
FIG. 10 is a diagram for illustrating the concept of a dedicated core (decor) in a wireless communication system to which the present invention may be applied.
FIG. 11 is a diagram illustrating a congestion control method according to an embodiment of the present invention.
FIG. 12 illustrates a congestion control method for each DCN in a wireless communication system to which the present invention may be applied.
FIGS. 13 to 15 are diagrams illustrating a congestion control method according to an embodiment of the present invention.
FIGS. 16 and 17 illustrate block diagrams of a communication apparatus according to an embodiment of the present invention.

### [Mode for Invention]

In what follows, preferred embodiments according to the present invention will be described in detail with reference to appended drawings. The detailed descriptions provided below together with appended drawings are intended only to explain illustrative embodiments of the present invention, which should not be regarded as the sole embodiments of the present invention. The detailed descriptions below include specific information to provide complete understanding of the present invention. However, those skilled in the art will be able to comprehend that the present invention can be embodied without the specific information.

For some cases, to avoid obscuring the technical principles of the present invention, structures and devices well-known to the public can be omitted or can be illustrated in the form of block diagrams utilizing fundamental functions of the structures and the devices.

A base station in this document is regarded as a terminal node of a network, which performs communication directly with a UE. In this document, particular operations regarded to be performed by the base station may be performed by an upper node of the base station depending on situations. In other words, it is apparent that in a network consisting of a plurality of network nodes including a base station, various operations performed for communication with a UE can be performed by the base station or by network nodes other than the base station. The term Base Station (BS) can be replaced with a fixed station, Node B, evolved-NodeB (eNB), Base Transceiver System (BTS), or Access Point (AP). Also, a terminal can be fixed or mobile; and the term can be replaced with User Equipment (UE), Mobile Station (MS), User Terminal (UT), Mobile Subscriber Station (MSS), Subscriber Station (SS), Advanced Mobile Station (AMS), Wireless Terminal (WT), Machine-Type Communication (MTC) device, Machine-to-Machine (M2M) device, or Device-to-Device (D2D) device.

In what follows, downlink (DL) refers to communication from a base station to a terminal, while uplink (UL) refers to communication from a terminal to a base station. In downlink transmission, a transmitter can be part of the base station, and a receiver can be part of the terminal. Similarly, in uplink transmission, a transmitter can be part of the terminal, and a receiver can be part of the base station.

Specific terms used in the following descriptions are introduced to help understanding the present invention, and the specific terms can be used in different ways as long as it does not leave the technical scope of the present invention.

The technology described below can be used for various types of wireless access systems based on Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), or Non-Orthogonal Multiple Access (NOMA). CDMA can be implemented by such radio technology as Universal Terrestrial Radio Access (UTRA) or CDMA2000. TDMA can be implemented by such radio technology as Global System for Mobile communications (GSM), General Packet Radio Service (GPRS), or Enhanced Data rates for GSM Evolution (EDGE). OFDMA can be implemented by such radio technology as the IEEE 802.11 (Wi-Fi), the IEEE 802.16 (WiMAX), the IEEE 802-20, or Evolved UTRA (E-UTRA). UTRA is part of the Universal Mobile Telecommunications System (UMTS). The 3rd Generation Partnership Project (3GPP) Long Term Evolution (LTE) is part of the Evolved UMTS (E-UMTS) which uses the E-UTRA, employing OFDMA for downlink and SC-FDMA for uplink transmission. The LTE-A (Advanced) is an evolved version of the 3GPP LTE system.

Embodiments of the present invention can be supported by standard documents disclosed in at least one of wireless access systems including the IEEE 802, 3GPP, and 3GPP2 specifications. In other words, among the embodiments of the present invention, those steps or parts omitted for the purpose of clearly describing technical principles of the present invention can be supported by the documents above. Also, all of the terms disclosed in this document can be explained with reference to the standard documents.

To clarify the descriptions, this document is based on the 3GPP LTE/LTE-A, but the technical features of the present invention are not limited to the current descriptions.

Terms used in this document are defined as follows.
- Universal Mobile Telecommunication System (UMTS): the 3rd generation mobile communication technology based on GSM, developed by the 3GPP
- Evolved Packet System (EPS): a network system comprising an Evolved Packet Core (EPC), a packet switched core network based on the Internet Protocol (IP) and an access network such as the LTE and UTRAN. The EPS is a network evolved from the UMTS.
- NodeB: the base station of the UMTS network. NodeB is installed outside and provides coverage of a macro cell.
- eNodeB: the base station of the EPS network. eNodeB is installed outside and provides coverage of a macro cell.
- User Equipment (UE): A UE can be called a terminal, Mobile Equipment (ME), or Mobile Station (MS). A UE can be a portable device such as a notebook computer, mobile phone, Personal Digital Assistant (PDA), smart phone, or a multimedia device; or a fixed device such as a Personal Computer (PC) or vehicle-mounted device. The term UE may refer to an MTC terminal in the description related to MTC.
- IP Multimedia Subsystem (IMS): a sub-system providing multimedia services based on the IP
- International Mobile Subscriber Identity (IMSI): a globally unique subscriber identifier assigned in a mobile communication network
- Machine Type Communication (MTC): communication performed by machines without human intervention. It may be called Machine-to-Machine (M2M) communication.
- MTC terminal (MTC UE or MTC device): a terminal (for example, a vending machine, meter, and so on) equipped with a communication function operating through a mobile communication network(For example, communicating with an MTC server via a PLMN) and performing an MTC function
- MTC server: a server on a network managing MTC terminals. It can be installed inside or outside a mobile communication network. It can provide an interface through which an MTC user can access the server. Also, an MTC server can provide MTC-related services to other servers (in the form of Services Capability Server (SCS)) or the MTC server itself can be an MTC Application Server.
- (MTC) application: services (to which MTC is applied) (for example, remote metering, traffic movement tracking, weather observation sensors, and so on)
- (MTC) Application Server: a server on a network in which (MTC) applications are performed
- MTC feature: a function of a network to support MTC applications. For example, MTC monitoring is a feature intended to prepare for loss of a device in an MTC application such as remote metering, and low mobility is a feature intended for an MTC application with respect to an MTC terminal such as a vending machine.
- MTC User (MTC User): The MTC user uses the service provided by the MTC server.
- MTC subscriber: an entity having a connection relationship with a network operator and providing services to one or more MTC terminals.
- MTC group: an MTC group shares at least one or more MTC features and denotes a group of MTC terminals belonging to MTC subscribers.
- Services Capability Server (SCS): an entity being connected to the 3GPP network and used for communicating with an MTC InterWorking Function (MTC-IWF) on a Home PLMN (HPLMN) and an MTC terminal. The SCS provides the capability for use by one or more MTC applications.
- External identifier: a globally unique identifier used by an external entity (for example, an SCS or an Application Server) of the 3GPP network to indicate (or identify) an MTC terminal (or a subscriber to which the MTC terminal belongs). An external identifier comprises a domain identifier and a local identifier as described below.
- Domain identifier: an identifier used for identifying a domain in the control region of a mobile communication network service provider. A service provider can use a separate domain identifier for each service to provide an access to a different service.
- Local identifier: an identifier used for deriving or obtaining an International Mobile Subscriber Identity (IMSI). A local identifier should be unique within an application domain and is managed by a mobile communication network service provider.
- Radio Access Network (RAN): a unit including a Node B, a Radio Network Controller (RNC) controlling the Node B, and an eNodeB in the 3GPP network. The RAN is defined at the terminal level and provides a connection to a core network.
- Home Location Register (HLR)/Home Subscriber Server (HSS): a database provisioning subscriber information within the 3GPP network. An HSS can perform functions of configuration storage, identity management, user state storage, and so on.
- RAN Application Part (RANAP): an interface between the RAN and a node in charge of controlling a core network (in other words, a Mobility Management Entity (MME)/Serving GPRS (General Packet Radio Service) Supporting Node (SGSN)/Mobile Switching Center (MSC)).
- Public Land Mobile Network (PLMN): a network formed to provide mobile communication services to individuals. The PLMN can be formed separately for each operator.
- Non-Access Stratum (NAS): a functional layer for exchanging signals and traffic messages between a terminal and a core network at the UMTS and EPS protocol stack. The NAS is used primarily for supporting mobility of a terminal and a session management procedure for establishing and maintaining an IP connection between the terminal and a PDN GW.
- Service Capability Exposure Function (SCEF): An entity within the 3GPP architecture for service capability exposure that provides a means for securely exposing services and capabilities provided by 3GPP network interfaces.

In what follows, the present invention will be described based on the terms defined above.

### Overview of system to which the present invention may be applied

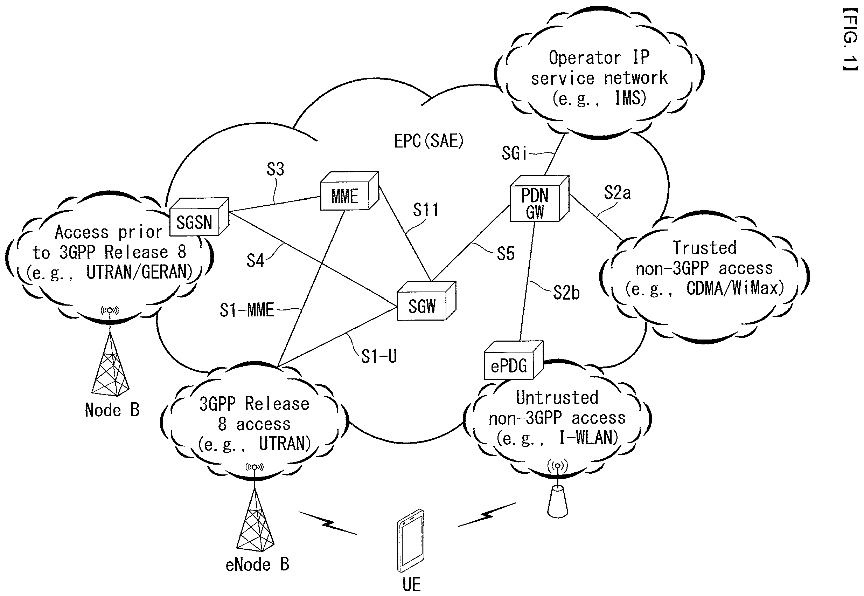

FIG. 1 illustrates an Evolved Packet System (EPS) to which the present invention can be applied.

The network structure of FIG. 1 is a simplified diagram restructured from an Evolved Packet System (EPS) including Evolved Packet Core (EPC).

The EPC is a main component of the System Architecture Evolution (SAE) intended for improving performance of the 3GPP technologies. SAE is a research project for determining a network structure supporting mobility between multiple heterogeneous networks. For example, SAE is intended to provide an optimized packet-based system which supports various IP-based wireless access technologies, provides much more improved data transmission capability, and so on.

More specifically, the EPC is the core network of an IP-based mobile communication system for the 3GPP LTE system and capable of supporting packet-based real-time and non-real time services. In the existing mobile communication systems (namely, in the 2nd or 3rd mobile communication system), functions of the core network have been implemented through two separate sub-domains: a Circuit-Switched (CS) sub-domain for voice and a Packet-Switched (PS) sub-domain for data. However, in the 3GPP LTE system, an evolution from the 3rd mobile communication system, the CS and PS sub-domains have been unified into a single IP domain. In other words, in the 3GPP LTE system, connection between UEs having IP capabilities can be established through an IP-based base station (for example, eNodeB), EPC, and application domain (for example, IMS). In other words, the EPC provides the architecture essential for implementing end-to-end IP services.

The EPC comprises various components, where FIG. 1 illustrates part of the EPC components, including a Serving Gateway (SGW or S-GW), Packet Data Network Gateway (PDN GW or PGW or P-GW), Mobility Management Entity (MME), Serving GPRS Supporting Node (SGSN), and enhanced Packet Data Gateway (ePDG).

The SGW operates as a boundary point between the Radio Access Network (RAN) and the core network and maintains a data path between the eNodeB and the PDN GW. Also, in case the UE moves across serving areas by the eNodeB, the SGW acts as an anchor point for local mobility. In other words, packets can be routed through the SGW to ensure mobility within the E-UTRAN (Evolved-UMTS (Universal Mobile Telecommunications System) Terrestrial Radio Access Network defined for the subsequent versions of the 3GPP release 8). Also, the SGW may act as an anchor point for mobility between the E-UTRAN and other 3GPP networks (the RAN defined before the 3GPP release 8, for example, UTRAN or GERAN (GSM (Global System for Mobile Communication)/EDGE (Enhanced Data rates for Global Evolution) Radio Access Network).

The PDN GW corresponds to a termination point of a data interface to a packet data network. The PDN GW can support policy enforcement features, packet filtering, charging support, and so on. Also, the PDN GW can act as an anchor point for mobility management between the 3GPP network and non-3GPP networks (for example, an unreliable network such as the Interworking Wireless Local Area Network (I-WLAN) or reliable networks such as the Code Division Multiple Access (CDMA) network and WiMax).

In the example of a network structure as shown in FIG. 1, the SGW and the PDN GW are treated as separate gateways; however, the two gateways can be implemented according to single gateway configuration option.

The MME performs signaling for the UE's access to the network, supporting allocation, tracking, paging, roaming, handover of network resources, and so on; and control functions. The MME controls control plane functions related to subscribers and session management. The MME manages a plurality of eNodeBs and performs signaling of the conventional gateway's selection for handover to other 2G/3G networks. Also, the MME performs such functions as security procedures, terminal-to-network session handling, idle terminal location management, and so on.

The SGSN deals with all kinds of packet data including the packet data for mobility management and authentication of the user with respect to other 3GPP networks (for example, the GPRS network).

The ePDG acts as a security node with respect to an unreliable, non-3GPP network (for example, I-WLAN, WiFi hotspot, and so on).

As described with respect to FIG. 1, a UE with the IP capability can access the IP service network (for example, the IMS) that a service provider (namely, an operator) provides, via various components within the EPC based not only on the 3GPP access but also on the non-3GPP access.

Also, FIG. 1 illustrates various reference points (for example, S1-U, S1-MME, and so on). The 3GPP system defines a reference point as a conceptual link which connects two functions defined in disparate functional entities of the E-UTAN and the EPC. Table 1 below summarizes reference points shown in FIG. 1. In addition to the examples of FIG. 1, various other reference points can be defined according to network structures.

**[Table 1]**

| Reference point | Description |
|---|---|
| S1-MME | Reference point for the control plane protocol between E-UTRAN and MME |
| S1-U | Reference point between E-UTRAN and Serving GW for the per bearer user plane tunneling and inter eNodeB path switching during handover |
| S3 | It enables user and bearer information exchange for inter 3GPP access network mobility in idle and/or active state. This reference point can be used intra-PLMN or inter-PLMN (e.g. in the case of Inter-PLMN HO). |
| S4 | It provides related control and mobility support between GPRS core and the 3GPP anchor function of Serving GW. In addition, if direct tunnel is not established, it provides the user plane tunneling. |
| S5 | It provides user plane tunneling and tunnel management between Serving GW and PDN GW. It is used for Serving GW relocation due to UE mobility if the Serving GW needs to connect to a non-collocated PDN GW for the required PDN connectivity. |
| S11 | Reference point for the control plane protocol between MME and SGW |
| SGi | It is the reference point between the PDN GW and the packet data network. Packet data network may be an operator external public or private packet data network or an intra-operator packet data network (e.g., for provision of IMS services). This reference point corresponds to Gi for 3GPP accesses. |

Among the reference points shown in FIG. 1, S2a and S2b corresponds to non-3GPP interfaces. S2a is a reference point which provides reliable, non-3GPP access, related control between PDN GWs, and mobility resources to the user plane. S2b is a reference point which provides related control and mobility resources to the user plane between ePDG and PDN GW.

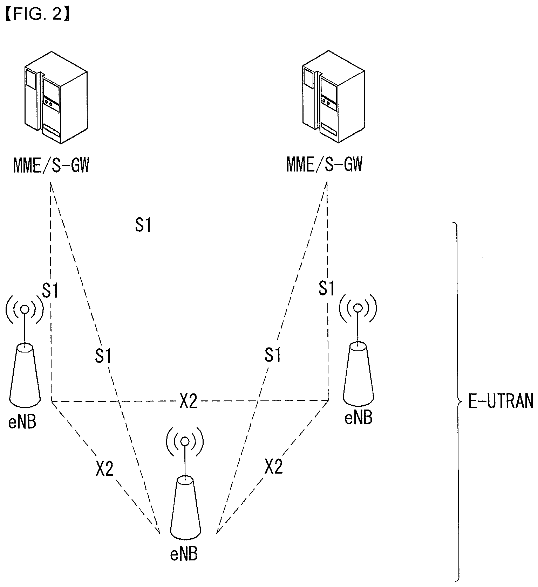

FIG. 2 illustrates one example of an Evolved Universal Terrestrial Radio Access Network (E-UTRAN) to which the present invention can be applied.

The E-UTRAN system is an evolved version of the existing UTRAN system, for example, and is also referred to as 3GPP LTE/LTE-A system. Communication network is widely deployed in order to provide various communication services such as voice (e.g., Voice over Internet Protocol (VoIP)) through IMS and packet data.

Referring to FIG. 2, E-UMTS network includes E-UTRAN, EPC and one or more UEs. The E-UTRAN includes eNBs that provide control plane and user plane protocol, and the eNBs are interconnected with each other by means of the X2 interface.

The X2 user plane interface (X2-U) is defined among the eNBs. The X2-U interface provides non-guaranteed delivery of the user plane Packet Data Unit (PDU). The X2 control plane interface (X2-CP) is defined between two neighboring eNBs. The X2-CP performs the functions of context delivery between eNBs, control of user plane tunnel between a source eNB and a target eNB, delivery of handover-related messages, uplink load management, and so on.

The eNB is connected to the UE through a radio interface and is connected to the Evolved Packet Core (EPC) through the S1 interface.

The S1 user plane interface (S1-U) is defined between the eNB and the Serving Gateway (S-GW). The S1 control plane interface (S1-MME) is defined between the eNB and the Mobility Management Entity (MME). The S1 interface performs the functions of EPS bearer service management, non-access stratum (NAS) signaling transport, network sharing, MME load balancing management, and so on. The S1 interface supports many-to-many-relation between the eNB and the MME/S-GW.

The MME may perform various functions such as NAS signaling security, Access Stratum (AS) security control, Core Network (CN) inter-node signaling for supporting mobility between 3GPP access network, IDLE mode UE reachability (including performing paging retransmission and control), Tracking Area Identity (TAI) management (for UEs in idle and active mode), selecting PDN GW and SGW, selecting MME for handover of which the MME is changed, selecting SGSN for handover to 2G or 3G 3GPP access network, roaming, authentication, bearer management function including dedicated bearer establishment, Public Warning System (PWS) (including Earthquake and Tsunami Warning System (ETWS) and Commercial Mobile Alert System (CMAS), supporting message transmission and so on.

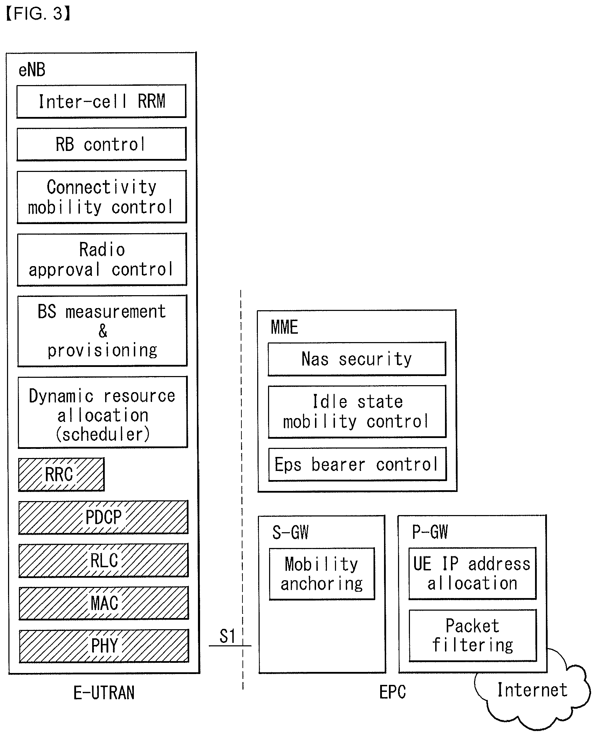

FIG. 3 exemplifies a structure of E-UTRAN and EPC in a wireless communication system to which the present invention can be applied.

Referring to FIG. 3, an eNB may perform functions of selecting gateway (e.g., MME), routing to gateway during radio resource control (RRC) is activated, scheduling and transmitting broadcast channel (BCH), dynamic resource allocation to UE in uplink and downlink, mobility control connection in LTE_ACTIVE state. As described above, the gateway in EPC may perform functions of paging origination, LTE_IDLE state management, ciphering of user plane, bearer control of System Architecture Evolution (SAE), ciphering of NAS signaling and integrity protection.

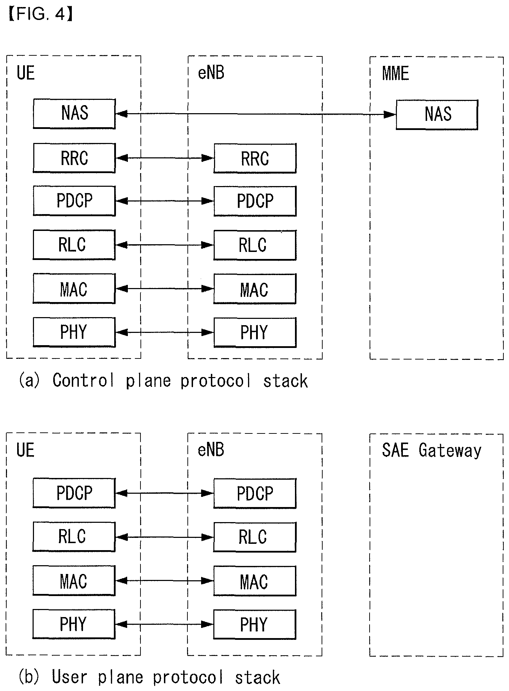

FIG. 4 illustrates a radio interface protocol structure between a UE and an E-UTRAN in a wireless communication system to which the present invention can be applied.

FIG. 4(a) illustrates a radio protocol structure for the control plane, and FIG. 4(b) illustrates a radio protocol structure for the user plane.

With reference to FIG. 4, layers of the radio interface protocol between the UE and the E-UTRAN can be divided into a first layer (L1), a second layer (L2), and a third layer (L3) based on the lower three layers of the Open System Interconnection (OSI) model, widely known in the technical field of communication systems. The radio interface protocol between the UE and the E-UTRAN consists of the physical layer, data link layer, and network layer in the horizontal direction, while in the vertical direction, the radio interface protocol consists of the user plane, which is a protocol stack for delivery of data information, and the control plane, which is a protocol stack for delivery of control signals.

The control plane acts as a path through which control messages used for the UE and the network to manage calls are transmitted. The user plane refers to the path through which the data generated in the application layer, for example, voice data, Internet packet data, and so on are transmitted. In what follows, described will be each layer of the control and the user plane of the radio protocol.

The physical layer (PHY), which is the first layer (L1), provides information transfer service to upper layers by using a physical channel. The physical layer is connected to the Medium Access Control (MAC) layer located at the upper level through a transport channel through which data are transmitted between the MAC layer and the physical layer. Transport channels are classified according to how and with which features data are transmitted through the radio interface. And data are transmitted through the physical channel between different physical layers and between the physical layer of a transmitter and the physical layer of a receiver. The physical layer is modulated according to the Orthogonal Frequency Division Multiplexing (OFDM) scheme and employs time and frequency as radio resources.

A few physical control channels are used in the physical layer. The Physical Downlink Control Channel (PDCCH) informs the UE of resource allocation of the Paging Channel (PCH) and the Downlink Shared Channel (DL-SCH); and Hybrid Automatic Repeat reQuest (HARQ) information related to the Uplink Shared Channel (UL-SCH). Also, the PDCCH can carry a UL grant used for informing the UE of resource allocation of uplink transmission. The Physical Control Format Indicator Channel (PCFICH) informs the UE of the number of OFDM symbols used by PDCCHs and is transmitted at each subframe. The Physical HARQ Indicator Channel (PHICH) carries a HARQ ACK (ACKnowledge)/NACK (Non-ACKnowledge) signal in response to uplink transmission. The Physical Uplink Control Channel (PUCCH) carries uplink control information such as HARQ ACK/NACK with respect to downlink transmission, scheduling request, Channel Quality Indicator (CQI), and so on. The Physical Uplink Shared Channel (PUSCH) carries the UL-SCH.

The MAC layer of the second layer (L2) provides a service to the Radio Link Control (RLC) layer, which is an upper layer thereof, through a logical channel. Also, the MAC layer provides a function of mapping between a logical channel and a transport channel; and multiplexing/demultiplexing a MAC Service Data Unit (SDU) belonging to the logical channel to the transport block, which is provided to a physical channel on the transport channel.

The RLC layer of the second layer (L2) supports reliable data transmission. The function of the RLC layer includes concatenation, segmentation, reassembly of the RLC SDU, and so on. To satisfy varying Quality of Service (QoS) requested by a Radio Bearer (RB), the RLC layer provides three operation modes: Transparent Mode (TM), Unacknowledged Mode (UM), and Acknowledge Mode (AM). The AM RLC provides error correction through Automatic Repeat reQuest (ARQ). Meanwhile, in case the MAC layer performs the RLC function, the RLC layer can be incorporated into the MAC layer as a functional block.

The Packet Data Convergence Protocol (PDCP) layer of the second layer (L2) performs the function of delivering, header compression, ciphering of user data in the user plane, and so on. Header compression refers to the function of reducing the size of the Internet Protocol (IP) packet header which is relatively large and contains unnecessary control to efficiently transmit IP packets such as the IPv4 (Internet Protocol version 4) or IPv6 (Internet Protocol version 6) packets through a radio interface with narrow bandwidth. The function of the PDCP layer in the control plane includes delivering control plane data and ciphering/integrity protection.

The Radio Resource Control (RRC) layer in the lowest part of the third layer (L3) is defined only in the control plane. The RRC layer performs the role of controlling radio resources between the UE and the network. To this purpose, the UE and the network exchange RRC messages through the RRC layer. The RRC layer controls a logical channel, transport channel, and physical channel with respect to configuration, re-configuration, and release of radio bearers. A radio bearer refers to a logical path that the second layer (L2) provides for data transmission between the UE and the network. Configuring a radio bearer indicates that characteristics of a radio protocol layer and channel are defined to provide specific services; and each individual parameter and operating methods thereof are determined. Radio bearers can be divided into Signaling Radio Bearers (SRBs) and Data RBs (DRBs). An SRB is used as a path for transmitting an RRC message in the control plane, while a DRB is used as a path for transmitting user data in the user plane.

The Non-Access Stratum (NAS) layer in the upper of the RRC layer performs the function of session management, mobility management, and so on.

A cell constituting the base station is set to one of 1.25, 2.5, 5, 10, and 20 MHz bandwidth, providing downlink or uplink transmission services to a plurality of UEs. Different cells can be set to different bandwidths.

Downlink transport channels transmitting data from a network to a UE include a Broadcast Channel (BCH) transmitting system information, PCH transmitting paging messages, DL-SCH transmitting user traffic or control messages, and so on. Traffic or a control message of a downlink multi-cast or broadcast service can be transmitted through the DL-SCH or through a separate downlink Multicast Channel (MCH). Meanwhile, uplink transport channels transmitting data from a UE to a network include a Random Access Channel (RACH) transmitting the initial control message and a Uplink Shared Channel (UL-SCH) transmitting user traffic or control messages.

Logical channels, which are located above the transport channels and are mapped to the transport channels. The logical channels may be distinguished by control channels for delivering control area information and traffic channels for delivering user area information. The control channels include a Broadcast Control Channel (BCCH), a Paging Control Channel (PCCH), a Common Control Channel (CCCH), a dedicated control channel (DCCH), a Multicast Control Channel (MCCH), and etc. The traffic channels include a dedicated traffic channel (DTCH), and a Multicast Traffic Channel (MTCH), etc. The PCCH is a downlink channel that delivers paging information, and is used when network does not know the cell where a UE belongs. The CCCH is used by a UE that does not have RRC connection with network. The MCCH is a point-to-multipoint downlink channel which is used for delivering Multimedia Broadcast and Multicast Service (MBMS) control information from network to UE. The DCCH is a point-to-point bi-directional channel which is used by a UE that has RRC connection delivering dedicated control information between UE and network. The DTCH is a point-to-point channel which is dedicated to a UE for delivering user information that may be existed in uplink and downlink. The MTCH is a point-to-multipoint downlink channel for delivering traffic data from network to UE.

In case of uplink connection between the logical channel and the transport channel, the DCCH may be mapped to UL-SCH, the DTCH may be mapped to UL-SCH, and the CCCH may be mapped to UL-SCH. In case of downlink connection between the logical channel and the transport channel, the BCCH may be mapped to BCH or DL-SCH, the PCCH may be mapped to PCH, the DCCH may be mapped to DL-SCH, the DTCH may be mapped to DL-SCH, the MCCH may be mapped to MCH, and the MTCH may be mapped to MCH.

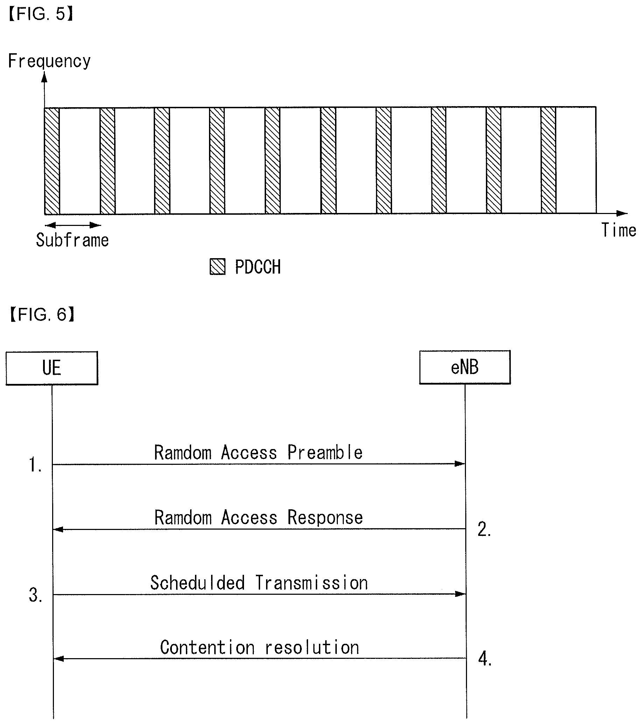

FIG. 5 is a diagram schematically exemplifying a structure of physical channel in a wireless communication system to which the present invention can be applied.

Referring to FIG. 5, the physical channel delivers signaling and data through radio resources including one or more subcarriers in frequency domain and one or more symbols in time domain.

One subframe that has a length of 1.0 ms includes a plurality of symbols. A specific symbol (s) of subframe (e.g., the first symbol of subframe) may be used for PDCCH. The PDCCH carries information for resources which are dynamically allocated (e.g., resource block, modulation and coding scheme (MCS), etc.).

### Random Access Procedure

Hereinafter, a random access procedure which is provided in a LTE/LTE-A system will be described.

The random access procedure is performed in case that the UE performs an initial access in a RRC idle state without any RRC connection to an eNB, or the UE performs a RRC connection re-establishment procedure, etc.

The LTE/LTE-A system provides both of the contention-based random access procedure that the UE randomly selects to use one preamble in a specific set and the non-contention-based random access procedure that the eNB uses the random access preamble that is allocated to a specific UE.

FIG. 6 is a diagram for describing the contention-based random access procedure in the wireless communication system to which the present invention can be applied.

### (1) Message 1 (Msg 1)

First, the UE randomly selects one random access preamble (RACH preamble) from the set of the random access preamble that is instructed through system information or handover command, selects and transmits physical RACH (PRACH) resource which is able to transmit the random access preamble.

The eNB that receives the random access preamble from the UE decodes the preamble and acquires RA-RNTI. The RA-RNTI associated with the PRACH to which the random access preamble is transmitted is determined according to the time-frequency resource of the random access preamble that is transmitted by the corresponding UE.

### (2) Message 2 (Msg 2)

The eNB transmits the random access response that is addressed to RA-RNTI that is acquired through the preamble on the Msg 1 to the UE. The random access response may include RA preamble index/identifier, UL grant that informs the UL radio resource, temporary cell RNTI (TC-RNTI), and time alignment command (TAC). The TAC is the information indicating a time synchronization value that is transmitted by the eNB in order to keep the UL time alignment. The UE renews the UL transmission timing using the time synchronization value. On the renewal of the time synchronization value, the UE renews or restarts the time alignment timer. The UL grant includes the UL resource allocation that is used for transmission of the scheduling message to be described later (Message 3) and the transmit power command (TPC). The TCP is used for determination of the transmission power for the scheduled PUSCH.

The UE, after transmitting the random access preamble, tries to receive the random access response of its own within the random access response window that is instructed by the eNB with system information or handover command, detects the PDCCH masked with RA-RNTI that corresponds to PRACH, and receives the PDSCH that is indicated by the detected PDCCH. The random access response information may be transmitted in a MAC packet data unit and the MAC PDU may be delivered through PDSCH.

The UE terminates monitoring of the random access response if successfully receiving the random access response having the random access preamble index/identifier same as the random access preamble that is transmitted to the eNB. Meanwhile, if the random access response message has not been received until the random access response window is terminated, or if not received a valid random access response having the random access preamble index same as the random access preamble that is transmitted to the eNB, it is considered that the receipt of random access response is failed, and after that, the UE may perform the retransmission of preamble.

### (3) Message 3 (Msg 3)

In case that the UE receives the random access response that is effective with the UE itself, the UE processes the information included in the random access response respectively. That is, the UE applies TAC and stores TC-RNTI. Also, by using UL grant, the UE transmits the data stored in the buffer of UE or the data newly generated to the eNB.

In case of the initial access of UE, the RRC connection request that is delivered through CCCH after generating in RRC layer may be transmitted with being included in the message 3. In case of the RRC connection reestablishment procedure, the RRC connection reestablishment request that is delivered through CCCH after generating in RRC layer may be transmitted with being included in the message 3. Additionally, NAS access request message may be included.

The message 3 should include the identifier of UE. There are two ways how to include the identifier of UE. The first method is that the UE transmits the cell RNTI (C-RNTI) of its own through the UL transmission signal corresponding to the UL grant, if the UE has a valid C-RNTI that is already allocated by the corresponding cell before the random access procedure. Meanwhile, if the UE has not been allocated a valid C-RNTI before the random access procedure, the UE transmits including unique identifier of its own (for example, S-TMSI or random number). Normally the above unique identifier is longer that C-RNTI.

If transmitting the data corresponding to the UL grant, the UE initiates a contention resolution timer.

### (4) Message 4 (Msg 4)

The eNB, in case of receiving the C-RNTI of corresponding UE through the message 3 from the UE, transmits the message 4 to the UE by using the received C-RNTI. Meanwhile, in case of receiving the unique identifier (that is, S-TMSI or random number) through the message 3 from the UE, the eNB transmits the 4 message to the UE by using the TC-RNTI that is allocated from the random access response to the corresponding UE. For example, the 4 message may include the RRC connection setup message.

The UE waits for the instruction of eNB for collision resolution after transmitting the data including the identifier of its own through the UL grant included the random access response. That is, the UE attempts the receipt of PDCCH in order to receive a specific message. There are two ways how to receive the PDCCH. As previously mentioned, in case that the message 3 transmitted in response to the UL grant includes C-RNTI as an identifier of its own, the UE attempts the receipt of PDCCH using the C-RNTI of itself, and in case that the above identifier is the unique identifier (that is, S-TMSI or random number), the UE tries to receive PDCCH using the TC-RNTI that is included in the random access response. After that, in the former case, if the PDCCH is received through the C-RNTI of its own before the contention resolution timer is terminated, the UE determines that the random access procedure is performed and terminates the procedure. In the latter case, if the PDCCH is received through the TC-RNTI before the contention resolution timer is terminated, the UE checks on the data that is delivered by PDSCH, which is addressed by the PDCCH. If the content of the data includes the unique identifier of its own, the UE terminates the random access procedure determining that a normal procedure has been performed. The UE acquires C-RNTI through the 4 message, and after that, the UE and network are to transmit and receive a UE-specific message by using the C-RNTI.

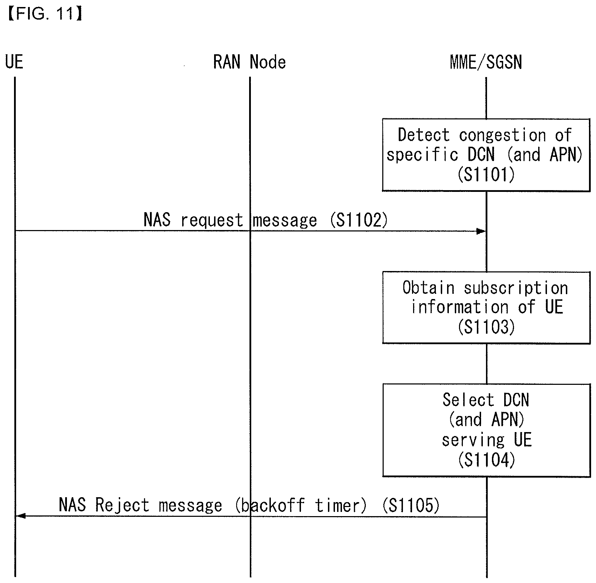

Meanwhile, the operation of the non-contention-based random access procedure, unlike the contention-based random access procedure illustrated in FIG. 11, is terminated with the transmission of message 1 and message 2 only. However, the UE is going to be allocated a random access preamble from the eNB before transmitting the random access preamble to the eNB as the message 1. And the UE transmits the allocated random access preamble to the eNB as the message 1, and terminates the random access procedure by receiving the random access response from the eNB.

### Machine-type communication (MTC)

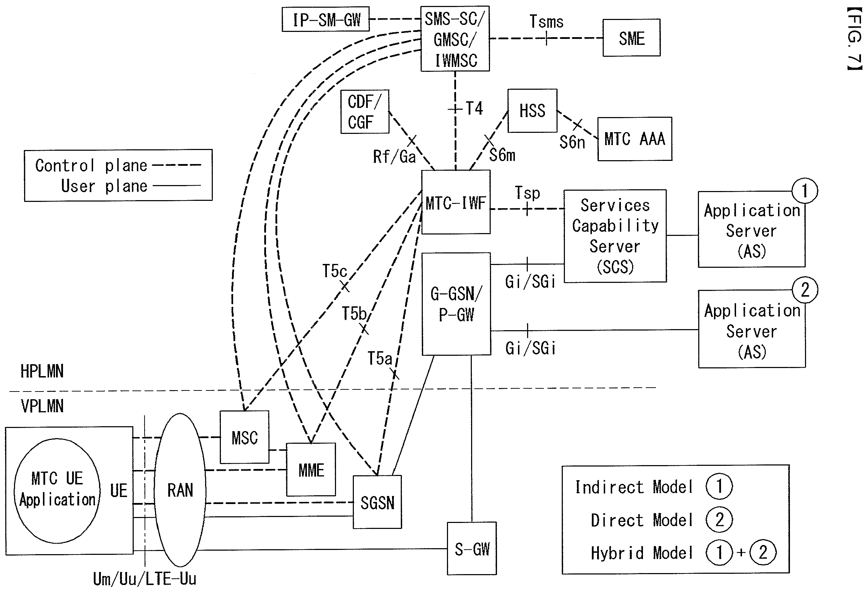

FIG. 7 is a diagram illustrating machine-type communication (MTC) architecture in a wireless communication system to which the present invention may be applied.

An end-to-end application between a UE (or an MTC UE) and an MTC application used for MTC may use service provided in the 3GPP system and selective services provided to the MTC server. The 3GPP system may provide transport and communication services (including 3GPP bearer services, IMS and SMS) including various optimizations that facilitate MTC.

FIG. 7 shows that a UE used for MTC is connected to a 3GPP network (UTRAN, E-UTRAN, GERAN, I-WLAN, etc.) through a Um/Uu/LTE-Uu interface. The architecture of FIG. 7 includes various MTC models (Direct model, Indirect model, and Hybrid model).

First, entities shown in FIG. 7 are described.

In FIG. 7, an application server is a server in a network in which the MTC application is executed. The technology for implementing various MTC applications may be applied to the MTC application server, and a detailed description thereof is omitted. Furthermore, in FIG. 7, the MTC application server may access the MTC server through a reference point API, and a detailed description thereof is omitted. Alternatively, the MTC application server may be co-located with the MTC server.

The MTC server (e.g., the SCS server of FIG. 7) is a server managing the MTC UE in a network, and it is connected to the 3GPP network and may communicate with a UE used for MTC and PLMN nodes.

An MTC-Interworking function (MTC-IWF) controls interworking between the MTC server and an operator core network and may function as the proxy of an MTC operation. In order to support an MTC indirect or hybrid model, the MTC-IWF may drive a specific function in the PLMN by relaying or interpreting a signaling protocol on a reference point Tsp. The MTC-IWF may perform a function of authenticating the MTC server before the MTC server sets up communication with the 3GPP network, a function of authenticating a control plane request from the MTC server, and various function related to trigger indication to be described later.

A short message service-service center (SMS-SC)/lnternet protocol short message gateway (IP-SM-GW) may manage the transmission/reception of a short message service (SMS). The SMS-SC may be responsible for a function for relaying a short message between a short message entity (SME) (entity that transmits or receives a short message) and the UE and storing and delivering the short message. The IP-SM-GW may be responsible for protocol interworking between an IP-based UE and an SMS-SC.

A charging data function (CDF)/charging gateway function (CGF) may perform an operation related to billing.

The HLR/HSS may function to store subscriber information (IMSI, etc.), routing information, configuration information and provide them to the MTC-IWF.

The MSC/SGSN/MME may perform control functions, such as mobility management for the network connection, authentication, and resource allocation of the UE. The MSC/SGSN/MME may perform a function of receiving trigger indication from the MTC-IWF in relation to triggering to be described later and processing the trigger indication in the form of a message provided to the MTC UE.

A gateway GPRS support node (GGSN)/serving-gateway (S-GW)+packet date network-gateway (P-GW) may perform a gateway function responsible for a connection between a core network and an external network.

Table 2 lists major reference points in FIG. 7.

**[Table 2]**

| Reference point | Description |
|---|---|
| Tsms | a reference point used for an entity outside the 3GPP system to communicate with an MTC UE through an SMS |
| Tsp | a reference point used for an entity outside the 3GPP system to communicate with the MTC-IWF in relation to control plane signaling |
| T4 | a reference point used by the MTC-IWF in order to route a device trigger to the SMS-SC of the HPLMN |
| T5a | A reference point between the MTC-IWF and a serving SGSN |
| T5b | a reference point between the MTC-IWF and a serving MME |
| T5c | a reference point between the MTC-IWF and a serving MSC |
| S6m | A reference point used by the MTC-IWF in order to query about ID information of a UE (E.164 mobile station international subscriber directory number (MSISDN) or an IMSI mapped to an external ID, etc.) and to collect UE accessibility and configuration information |

In Table 2, one or more reference points of T5a, T5b, and T5c are referred to as T5.

Meanwhile, user plane communication with the MTC server in the case of the indirect and hybrid models and communication with the MTC application server in the case of the direct and hybrid models may be performed using the existing protocol through reference points Gi and SGi.

Detailed contents related to the contents described in FIG. 7 may be incorporated by reference with reference to 3GPP TS 23.682 Document.

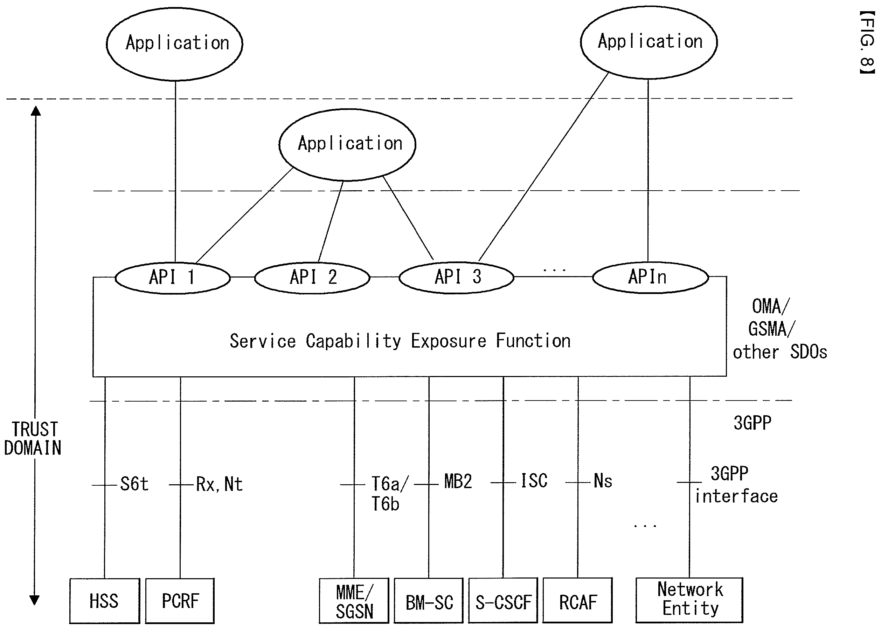

FIG. 8 illustrates architecture for service capability exposure in a wireless communication system to which the present invention may be applied.

The architecture for service capability exposure illustrated in FIG. 8 enables the 3GPP network to safely expose its own service and capability provided by a 3GPP network interface to an outside 3rd party service provider application.

A service capability exposure function (SCEF) is a core entity within the 3GPP architecture for service capability exposure, which provides means for safely exposing a service and capability provided by the 3GPP network interface. In other words, the SCEF is a core entity for providing a service function belonging to a trust domain operated by a mobile communication operator. The SCEF provides a 3^{rd} party service provider with an API interface and provides service functions of 3GPP to the 3^{rd} party service provider through a connection with various entities of 3GPP. The SCEF function may be provided by the SCS.

If a Tsp function can be exposed through an application program interface (API), the MTC-IWF may be co-located with the SCEF. A protocol (e.g., DIAMETER, RESTful APIs, XML over HTTP) for specifying a new 3GPP interface based on multiple factors is selected. In this case, the multiple factors require the easiness of exposure of requested information or a need for a specific interface, but are not limited thereto.

The SCEF is an entity belonging to a trust domain and may be operated by a cellular operator and may be operated by a 3^{rd} party operator having a trusted relation. The SCEF is a node for service architecture exposing carried out under work items, such as monitoring enhancement (MONTE) of 3GPP Release 13 and architecture enhancements for service capability exposure (AESE), and it is connected to 3GPP entities that will provide services as in FIG. 8 and functions to manage providing an external 3^{rd} party with functions related to multiple monitoring and billing and a communication pattern of a 3r party operator within the EPS in the middle.

### RRC connection setup procedure

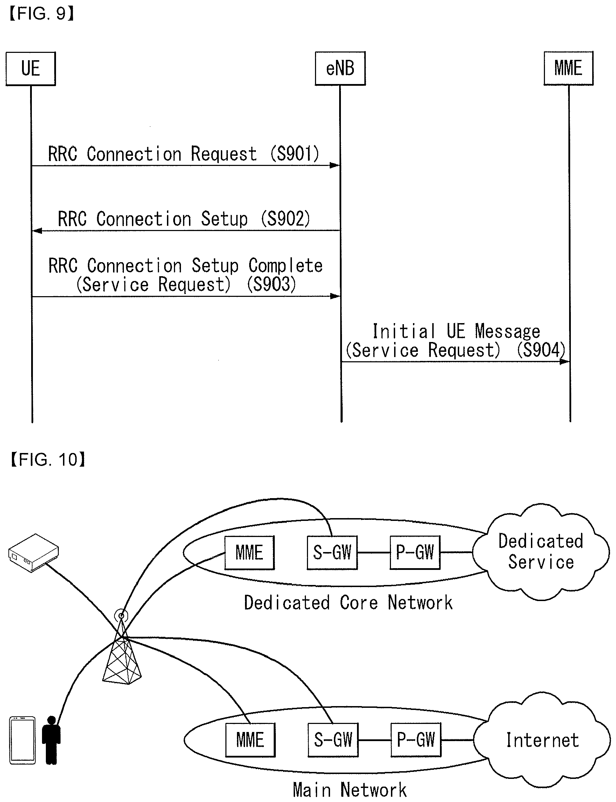

FIG. 9 is a diagram illustrating an RRC connection setup procedure in a wireless communication system to which the present invention may be applied.

Th RRC connection setup procedure is used to switch from an RRC Idle mode to an RRC Connected mode. A UE needs to switch to the RRC Connected mode before any signaling procedure or before delivering any application data to an eNB.

The RRC connection setup procedure may be initiated by a UE or may be triggered by a UE or network. For example, if a UE has data to be transmitted to a network or a UE moves to a new tracking area, the UE triggers an RRC connection setup procedure. Furthermore, a network triggers an RRC connection setup procedure by transmitting a paging message to a UE.

Referring to FIG. 9, a UE transmits an RRC Connection Request message to an eNB in order to request an RRC connection (S901).

The RRC Connection Request message includes a UE identity (e.g., an SAE temporary mobile subscriber identity (S-TMSI) or a random ID) and an establishment cause.

The establishment cause is determined based on an NAS procedure (e.g., attach, detach, tracking area update, a service request, an extended service request).

The RRC Connection Request message is transmitted as part of a random access procedure. That is, the RRC Connection Request message corresponds to the third message in FIG. 6.

The eNB transmits an RRC connection setup message to the UE as a response to the RRC Connection Request message (S902).

After receiving the RRC connection setup message, the UE switches to the RRC_CONNECTED mode.

The UE transmits an RRC Connection Setup Complete message to the eNB in order to confirm the successful completion of RRC connection setup (S903).

The UE includes an NAS message (e.g., Initial Attach message, a Service Request message, etc.) in the RRC Connection Setup Complete message and transmits the RRC Connection Setup Complete message to the eNB.

The eNB obtains a Service Request message from the RRC Connection Setup Complete message and delivers it to the MME through an initial UE message, that is, an S1AP message (S904).

A control signal between the eNB and the MME is delivered through the S1AP message in the S1-MME interface. The S1AP message is delivered through an S1 signaling connection for each user. The S1 signaling connection is defined by an ID pair (i.e., eNB UE S1AP ID and MME UE S1AP ID) assigned so that the eNB and the MME to identify the UE.

The eNB assigns the eNB UE S1AP ID, includes it in the Initial UE Message, and transmits the Initial UE Message to the MME. The MME receives the Initial UE Message, and sets up the S1 signaling connection between the eNB and the MME by assigning the MME S1AP UE ID.

### NAS level congestion control

NAS level congestion control includes an access point name (APN) based congestion control function and a general NAS level mobility management control function.

In this case, the APN means a PDN identity (i.e., PDN ID) and means a text string for denoting or identifying a PDN. A P-GW to be used by a UE may be determined by the APN. Furthermore, a tunnel for a UE to connect to a PDN may be defined by the APN. Each PDN may have an APN for identifying a corresponding PDN and one or more P-GWs associated with the corresponding PDN.

APN based congestion control is used to control and prevent EPS mobility management (EMM) and EPS session management (ESM) signaling congestion associated with a specific APN and UE. Both a UE and a network support this function in order to provide an APN based on EMM and ESM congestion control.

The MME may detect NAS signaling congestion associated with an APN and start/terminate the execution of APN based congestion control based on the following criteria.
- A maximum number of EPS bearers activated for each APN;
- A maximum rate of EPS bearer activation for each APN;
- One or more P-GWs of an APN is not reachable by the MME or congestion is indicated;
- A maximum rate of mobility management (MM) signaling associated with a specific subscribed APN and device
- Setting within network management

The MME should not apply NAS level congestion control to access of high priority and emergency services.

Along with general NAS level Mobility Management control, the MME may reject a NAS level MM signaling request under a general congestion state.

### 1) APN based Session Management congestion control

APN based Session Management congestion control may be activated by the MME, for example, due to a congestion situation in the MME or based on the restart/recovery condition of a P-GW or in response to the failure/recovery of a P-GW for a specific APN(s).

When ESM congestion associated with an APN is detected, the MME may reject ESM request (e.g., PDN Connectivity, Bearer Resource Allocation or Bearer Resource Modification Request) from a UE using a session management (SM) backoff timer. If the UE does not provide an APN, the MME uses an APN used in a P-GW selection procedure.

The MME may deactivate PDN connectivity belonging to a congested APN by transmitting an NAS Deactivate EPS Bearer Context Request message to a UE along with an SM backoff timer. When the SM backoff timer is set within the NAS Deactivate EPS Bearer Context Request, a reactivation requested cause is not set.

When congestion control is activated with respect to the APN, if a request not having a low access priority indicator is rejected by the MME, the MME may store an SM backoff time for each UE and APN. Before the SM stored backoff time expires, the MME may immediate reject any next request targeted at a corresponding APN from a UE. If the MME stores the SM backoff time for each UE and APN and the MME determines to transmit a Session Management Request message to a UE connected to a congested APN (e.g., due to a reason of a reduced congestion situation), the MME clears the SM backoff time before it transmits any Session Management Request message to the UE.

When an SM backoff timer is received within an EPS Session Management Reject message or within a NAS Deactivate EPS Bearer Context Request message, the UE performs a next operation until the timer expires.
- If an APN is provided within a rejected EPS Session Management Request message or the SM backoff timer is received within a NAS Deactivate EPS Bearer Context Request message, a UE does not initiate any SM procedure with respect to a congested APN. The UE may initiate an SM procedure with respect to another APN.
- If an APN is not provided within a rejected EPS Session Management request, a UE does not initiate any SM Request without the APN. The UE may initiate an SM procedure for a specific APN.
- Although a cell/tracking area (TA)/PLMN/RAT is changed, the SM backoff timer is not stopped.
- A UE is permitted to initiate an SM procedure for high priority access and emergency services although the SM backoff timer operates.
- When a UE receives a network-initiated EPS Session Management Request message with respect to a congested APN while the SM backoff timer operates, the UE stops the SM backoff timer associated with the APN and responds to the MME.
- If a UE is configured to neglect low access priority and while the SM backoff timer operates due to a Reject message as a response to a request having low access priority, a higher layer within the UE may request the initiation of an SM procedure without low access priority.

A UE is permitted to initiate a PDN Disconnection procedure during the operation of the SM backoff timer (e.g., PDN Disconnection Request message transmission).

A UE supports an individual SM backoff timer with respect to all of APNs that cannot be activated by the UE.

In order to prevent a plurality of UEs from initiating deferred requests (almost) at the same time, the MME needs to select an SM backoff timer value so that the deferred requests are not synchronized.

APN based Session Management congestion control may be applied to NAS ESM signaling initiated by a UE within the control plane. In SM congestion control, a UE is not prohibited to initiate a service request procedure in order to transmit/receive data or activate a user plane bearer toward an APN(s) under ESM congestion control.

### 2) APN based Mobility Management congestion control

The MME may perform APN based congestion control for a specific subscribed APN and UE by rejecting an Attach procedure using an MM backoff timer.

When congestion control is activated with respect to a specific APN and UE, the MM backoff timer may be transmitted from the MME to the UE.

If the MME maintains UE context, when a request not having a low access priority indicator is rejected by the MME, the MME may store a backoff timer for each UE. The MME may immediately reject any next request from a UE before a stored backoff time expires.

After an Attach request is rejected, the MME needs to maintain subscription data for a specific time.

This permits the rejection of a next request without HSS signaling when a congestion situation caused by a UE continues with respect to a specific subscribed APN.

While the MM backoff timer operates, the UE does not initiate any NAS request for an MM procedure. However, although the MM backoff timer operates, the UE is permitted to initiate the MM procedure for high priority access and emergency services. Although the MM backoff timer operates, in the case of the Connected mode, the UE is permitted to perform tracking area update (TAU).

While the MM backoff timer operates, if the MM backoff timer has started due to a Reject message received as a response to a request having low access priority and a higher layer within a UE has requested the setup of PDN connectivity without low access priority or the UE has established PDN connectivity not having low access priority, the UE whose approval has been configured to neglect low access priority is permitted to initiate an MM procedure without low access priority.

In order to prevent a plurality of UEs from initiating deferred requests (almost) at the same time, the MME needs to select an MM backoff timer value so that the deferred requests are not synchronized.

### 3) General NAS level Mobility Management congestion control

Under a common overload state, the MME may reject MM signaling requested by a UE. When a NAS request is rejected, an MM backoff timer may be transmitted by the MME. If a request not having a low access priority indicator is rejected by the MME and the MME stores UE context, the MME may store a backoff time for each UE.

The MME may immediately reject any next request from the UE before the stored backoff time expires. While the MM backoff timer operates, the UE does not initiate any NAS Request for an MM procedure other than a Detach procedure and an MM procedure for high priority access, emergency services and mobile terminated services. After such a Detach procedure, the MM backoff timer continues to operate. While the MM backoff timer operates, in the case of the Connected mode, the UE is permitted to perform TAU. If the UE receives a paging Request from the MME while the MM backoff timer operates, the UE stops the MM backoff timer and initiates a service request procedure or initiates a TAU procedure.

While the MM backoff timer operates, if the MM backoff timer has started due to a Reject message received as a response to a request having low access priority and a higher layer within a UE rejects the establishment of PDN connectivity without low access priority or the UE has established PDN connectivity not having low access priority, the UE whose approval has been configured to neglect low access priority is permitted to initiate an MM procedure without low access priority.

While the MM backoff timer operates, a UE whose approval has been configured with respect to transmission other than reporting is permitted to initiate a control plane Service Request procedure without reporting. If the MM backoff timer has started due to a Reject message received as a response to a request other than reporting, while the MM backoff timer operates, the UE does not initiate a control plane Service Request procedure other than reporting.

The MM backoff timer is not influenced by a Cell/RAT and PLMN change. A Cell/RAT and TA change does not stop the MM backoff timer. The MM backoff timer does not correspond to a trigger for a PLMN reselection. When an unequal and new PLMN is accessed, the backoff timer is stopped.

In order to prevent a plurality of UEs from initiating deferred requests (almost) at the same time, the MME needs to select an MM backoff timer value so that the deferred requests are not synchronized.

When a UE receives a handover command, the UE performs a handover procedure regardless of whether the MM backoff timer is driven or not.

The MME does not reject a TAU procedure performed when a UE is already in the Connected mode state.

In mobility between Idle mode CN nodes, the MME may reject a TAU procedure and include an MM backoff timer value in a Tracking Area Reject message.

If a TAU request or service request is rejected using an MM backoff timer greater than the sum of the periodic TAU timer and implicit Detach timer of a UE, the MME needs to adjust a reachable timer and/or an implicit Detach timer so that the MME is not detached.

### Dedicated core network (DCN)

Through this function, a network operator may deploy a plurality of DCNs within a PLMN using each DCN including one or multiple CN node. Each DCN may dedicatedly provide services to a subscriber of a specific type. The DCN may be deployed for one or more RATs (e.g., GERAN, UTRAN, E-UTRAN, Wideband E-UTRAN (WB-E-UTRAN), and some of E-UTRANs other than an NB-IoT) and narrowband-Internet of Things (NB-IoTs)). A specific characteristic/function or extension is provided to the DCN in order to isolate a specific UE or subscriber (e.g., machine-to-machine (M2M) subscriber, a subscriber belonging to a specific company or separate management domain, etc.).

A DCN includes one or more MMEs/SGSNs and may include one or more SGWs/PGWs/policies and charging rules functions (PCRFs). By using this function, a subscriber may be assigned a DCN based on subscription information ("UE usage type") and served by the DCN.

A major specific function is to route and maintain a UE in each DCN. The following deployment scenarios are supported by the DCN.
- The DCN may be deployed to support only a single RAT (e.g., in order to support the E-UTRAN, a dedicated MME is deployed and a dedicated SGSN is not deployed), to support multiple RATs or to support all of RATs.
- A network that deploys a DCN may have a default DCN. The default DCN manages a UE if the DCN is not available or if sufficient information is not available in order to assign the DCN to the UE. One or multiple DCNs may be deployed along with default DCNs sharing the same RAN.
- Architecture supports a scenario in which a DCN is deployed only in some of a PLMN (e.g., for a single RAT only or deployed in some of a PLMN area). Heterogeneous or partial deployment of such a DCN complies with an operator deployment and configuration. Services having different characteristics or functions are provided depending on whether a UE is located in a service area or inside or outside an RAT supporting the DCN.
- Although a DCN is not deployed to serve the service area of a specific RAT or PLMN, a UE within the RAT or service area may be still served by a PGW from the DCN.

A higher level summary for supporting a DCN is as follows.
- A selective subscription information parameter ("UE usage type") is used to select a DCN. An operator sets that a DCN(s) serves any UE usage type(s). An HSS provides an MME/SGSN with a "UE usage type" value within subscription information of a UE.
- A serving network selects a DCN based on the set mapping (between a UE usage type and the DCN 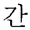 ) of an operator, and the policy and UE-related context information (e.g., information about roaming) of the operator which are available in a locally configured serving network. UEs having another UE usage type value may be served by the same DCN. Furthermore, UEs sharing the same UE usage type may be served by different DCNs.
- If there is setting for a specific "UE usage type" value within subscription information, a serving MME/SGSN may serve a UE based on a default DCN or may select a DCN using a serving operator a specific policy.
- The "UE usage type" is associated with a UE. That is, only a single "UE usage type" is present for each UE subscription.
- In the case of the MME, an MME group ID(s) (MME group identifier (MMEGI) identifies a DCN PLMN. In the case of the SGSN, a group ID(s) (i.e., a group of SGSNs belonging to a DCN within a PLMN) identifies a DCN within the PLMN. The ID is a network resource identifier (NRI) and may have the same format (e.g., NRI does not identify a specific SGSN node within a serving area.). In this case, this is called a "null-NRI." Alternatively, the ID may have a format of an independent NRI. In this case, this may be called an "SGSN group ID." The "Null-NRI" or "SGSN Group ID" is provided to a RAN whose network node selection function (NNSF) procedure of selecting an SGSN from an SGSN(s) group corresponding to a Null-NRI/SGSN Group ID is triggered by an SGSN.
- A dedicated MME/SGSN that serves a UE selects a dedicated S-GW and P-GW based on a UE usage type.
- When a network is first accessed, if sufficient information is not available in order for a RAN to select a specific DCN, the RAN may select a CN node from a default DCN. Redirection to another DCN may be necessary.
- In order to redirect a UE from one DCN to the other DCN, a redirection procedure through a RAN is used to transmit the NAS message of the UE to a target DCN.
- In order to select and maintain a proper DCN for a UE(s), all of selection functions include the NNSF of an RAN node and may be aware of a DCN(s).

### Dedicated core (DECOR)

FIG. 10 is a diagram for illustrating the concept of a dedicated core DECOR in a wireless communication system to which the present invention may be applied.

The Decor is a function for registering UEs that require services further specialized in characteristic services, such as MTC/loT UEs, with a corresponding DCN. In 3GPP Release (Rel)-13, a method of registering a corresponding UE as a proper DCN based on "UE usage type" within subscription information of the UE stored in the HSS when the UE performs Attach/TAU has been introduced.

The Decor has a disadvantage in that a UE must be rerouted to a DCN after the UE is registered with a main network at once. Accordingly, in order for the UE to be registered with a proper DCN at once when it accesses a network, the UE may provide proper DCN selection-related information to the network.

This is described as follows.

### 1) Dedicated core network (DCN) selection by UE assistance

This function is to reduce signaling necessary to select a DCN related to a UE in assistance information from the UE. This supplements the Rel-13 DECOR selection mechanism. All of 3GPP RATs, that is, the E-UTRAN, UTRAN, GERAN and NB-IOT, are supported. Furthermore, such enhancement can improve isolation between dedicated core networks by preventing redirection between DCNs. That is, a UE accessing a not-permitted DCN can be prevented. It is advantageous when this solution operates when a UE changes a serving PLMN.

### 2) Congestion control for DCN type

Along with a DCN(s), a UE is indicated by a RAN so that the UE is served by a DCN having a specific characteristic according to a subscription profile. The UE may provide assistance information so that a RAN node can select a proper DCN. If a plurality of UEs providing different DCN types is served by the same DCN because the DCN may serve a different DCN type, congestion in a network may be increased. The present method of performing congestion control may not be suitable for an eDECOR because the DCN has not been improved to perform congestion control based on the DCN characteristic. Rather, they enable congestion control based on other aspects (e.g., delay tolerance). However, if all of UEs using the eDECOR are configured to have delay tolerance, this factor will not play a major role when it determines how congestion control is applied to which UE regardless of a DCN type for UEs.

If a specific DCN experiences congestion, a network may need to determine a method of controlling congestion based on a DCN type. Accordingly, such a main issue has an object of providing a solution for controlling a congestion level in a dedicated core network based on a desired DCN type.

That is, a system needs to be capable of controlling congestion in the network based on the DCN type.

### Congestion Control method

The present invention proposes an individual congestion control method for different DCN types when congestion occurs in a core network in which the same dedicated core network (DCN) supports different one or more DCN types.

As the congestion control method, a mechanism in which a UE provides a DCN type upon network RRC connection setup and an eNB performs backoff by providing an extended wait time based on the provided DCN type has been introduced. In this case, in accordance with this method, there is a disadvantage in that a UE has to provide a DCN type to an eNB whenever it performs an RRC setup procedure.

Today, DCN types may be classified based on a UE usage type. Alternatively, the DCN types may be classified based on a DCN assistance selection parameter including information for each operator. "Solution #1: UE assistance information for selection of EPC DCN" of TR 23.711 has been proposed to classify a proper DCN type by providing the DCN assistance selection parameter to a UE. "Solution #3: Indication-based DCN selection toward RAN of UE" has proposed a method of selecting a DCN using a UE usage type.

Hereinafter, in the description of the present invention, it is assumed that a DCN type may be selected as a UE usage type, for convenience of description. In this case, although the DCN assistance selection parameter is used, the classification of a DCN type may be sufficient by a UE usage type only.

The UE usage type means information that is stored in the HSS and is transferred to the MME and stored when a UE is attached. One UE usage type is performed per UE. When congestion is discovered with respect to a specific DCN type, the MME may perform NAS level congestion control on a UE using a corresponding UE usage type.

Accordingly, the present invention proposes a DCN specific congestion control method as follows.

### 1) DCN specific NAS level congestion control method

DCN specific NAS level congestion control is applied to a specific DCN of a UE. Each DCN may have one UE usage type.

If a UE usage type is stored in the subscription data of a UE within the HSS, the UE belongs to a specific DCN type. The UE usage type is stored for each UE within the HSS and obtained by the MME as part of common HSS signaling. The UE may be aware of its own UE usage type.

DCN specific NAS level congestion control may be activated with respect to session management signaling or mobility management signaling or both. DCN specific NAS level congestion control is activated according to an operator policy.

When DCN specific NAS level congestion control for Session Management signaling is activated with respect to a specific DCN type, the operation of the MME is similar to the aforementioned APN based Session Management congestion control method, but may be modified as follows.
- The MME may apply ESM congestion control to all of APNs subscribed with respect to a UE belonging to a specific DCN.
- The MME rejects an EPS session management (ESM) request(s) (e.g., PDN Connectivity, Bearer Resource Allocation or Bearer Resource Modification Requests) from a UE belonging to a specific DCN type using a Session Management backoff timer; or
- The MME rejects an EPS session management (ESM) request(s) (e.g., PDN Connectivity, Bearer Resource Allocation or Bearer Resource Modification Requests) from a UE belonging to a specific DCN type and a specific APN using a Session Management backoff timer.

The session management backoff timer may be associated with a specific DCN type and APN. A specific (Reject) cause may be provided to a UE within an EPS session management (ESM) request(s) for DCN specific NAS level congestion control for Session Management signaling.

A (Reject) cause value(s) may be provided for each specific DCN type and APN for DCN specific NAS level congestion control for Session Management signaling. A common (Reject) cause value may be used in all of DCN types(s) and APN(s) or different (Reject) cause value(s) may be used for each DCN type and APN.

A UE should not request an EPS session management (ESM) request(s) from a network within a PLMN for the same DCN type and/or the same APN until the backoff timer expires.

If DCN specific NAS level congestion control for Mobility Management signaling is activated with respect to a specific DCN type, the operation of the MME is similar to the aforementioned APN based mobility management congestion control method, but may be applied to a UE that has subscribed to a specific DCN rather than a specific APN.
- The MME rejects an EPS mobility management (EMM) request(s) (e.g., Attach Request, tracking area update request or service request or extended service request) from a UE belonging to a specific DCN type using a Mobility Management backoff timer.

The Mobility Management backoff timer may be associated with a specific DCN type. A specific (Reject) cause may be provided to a UE within an EPS mobility management (EMM) request(s) message(s) for DCN specific NAS level congestion control for Mobility Management signaling.

A (Reject) cause value(s) may be provided for each specific DCN type for DCN specific NAS level congestion control for Mobility Management signaling. A common (Reject) cause value may be used in all of DCN types or a different (Reject) cause value(s) may be used for each DCN type. A UE may attempt the selection of a radio access technology (RAT) (e.g., GERAN or UTRAN) and/or a PLMN based on a specific (Reject) cause value(s).

A UE should request an EPS mobility management (EMM) request(s) form a network within a PLMN for the same DCN type until the backoff timer expires.

DCN specific NAS level congestion control is performed in the MME based on subscription information of a UE provided by the HSS. Accordingly, this does not affect the UE.

FIG. 11 is a diagram illustrating a congestion control method according to an embodiment of the present invention.

Referring to FIG. 11, an MME/SGSN may detect congestion of one or more DCNs served by the MME/SGSN (S1101).

That is, the MME/SGSN serving a plurality of DCNs may detect congestion of one or more of the plurality of served DCNs.

For example, the MME/SGSN may detect the congestion of a DCN(s) based on the following criteria.
- If a maximum number of EPS bearers activated for each DCN is a preset threshold or more (exceeds the threshold);
- If a maximum rate of EPS bearer activation for each DCN is a preset threshold or more (exceeds the threshold);
- If one or more P-GWs of a DCN is not reachable by the MME or are indicated as congestion;
- If a maximum rate of mobility management (MM) signaling associated with a specific DCN and device is a preset threshold or more (exceeds the threshold);
- Setting within network management

The MME/SGSN receives a NAS request message from the UE (S1102).

The NAS request message may include a session management (SM) request message and/or a mobility management (MM) request message.

For example, the SM request message may include a PDN Connectivity Request message, a Bearer Resource Allocation Request message and/or a Bearer Resource Modification Requests message.

Furthermore, the MM request message may include an Attach Request message, a Tracking Area Update Request message, a Service Request message and/or an Extended Service Request message.

The MME/SGSN obtains the subscription information/data of the UE from an HSS (S1103).

In this case, the subscription information may include a UE usage type. The UE usage type may be stored for each UE in the HSS.

The MME/SGSN selects a DCN serving the UE based on the UE usage type (S1104).

If the UE usage type of the corresponding UE has been stored in the subscription information of the UE in the HSS, the UE may be served by a specific DCN.

In this case, UEs to which one (or more) UE usage types have been assigned may be served by one (or more) DCNs.

If a DCN serving the UE is a DCN in which congestion has been detected, the MME/SGSN transmits a NAS Reject message to the UE (S1105).

In this case, the NAS Reject message may include a backoff timer. Furthermore, the MME/SGSN may store a backoff time for each UE (or for each DCN per UE) as UE context.

In this case, if a plurality of DCNs is served by the MME/SGSN, the MME/SGSN may independently determine backoff timer values for each DCN. Furthermore, in order to prevent a plurality of UEs served by the same DCN from initiating deferred NAS requests (almost) at the same time, the MME/SGSN may independently determine backoff timer values for each UE so that the deferred NAS requests are not synchronized.

The NAS Reject message may include a session management (SM) Reject message and/or mobility management (MM) Reject message.

For example, the SM Reject message may include a PDN Connectivity Reject message, a Bearer Resource Allocation Reject message and/or a Bearer Resource Modification Reject message.

Furthermore, the MM Reject message may include an Attach Reject message, a Tracking Area Update Reject message and/or a Service Reject message.

The UE that has received the backoff timer from the MME/SGSN stores the received backoff timer and may not start any NAS Request for the same DCN (i.e., DCN serving the UE) until the backoff timer expires (e.g., a NAS request for a Detach procedure, high priority access, emergency services or mobile terminated services may be excluded).

Before the stored backoff time for the DCN of the UE expires, the MME/SGSN may immediately reject any next NAS request (e.g., a NAS request for a Detach procedure, high priority access, emergency services or mobile terminated services may be excluded) received with respect to the same DCN (i.e., DCN serving the UE) from the corresponding UE.

Furthermore, when the MME/SGSN detects the congestion of a specific DCN as in step S1101 while the UE is served by the specific DCN, it may transmit a Detach Request message for the corresponding DCN to the UE.

When the UE receives the Detach Request message, it transmits a Detach Accept message as a response to the Detach Request message. Thereafter, the existing NAS signaling connection for the corresponding DCN of the corresponding UE may be released.

Meanwhile, although FIG. 11 illustrates the congestion control method independently activated for each DCN, congestion control may be activated by taking an APN into consideration.

For example, if one DCN is connected to a plurality of APNs, in accordance with the method described in FIG. 11, when congestion control is activated with respect to the corresponding DCN, congestion control may be identically applied to all of APNs connected to the corresponding DCN. Alternatively, to the contrary, if a plurality of DCNs is connected to one APN, when the existing APN based congestion control is activated, congestion control may be identically applied to all of the DCNs connected to the corresponding APN.

In contrast, if one DCN is connected to a plurality of APNs, congestion control may be independently activated for each APN. Furthermore, to the contrary, if a plurality of DCNs is connected to one APN, congestion control may be activated for each DCN. That is, congestion control may be independently activated based on a pair/combination of a DCN and an APN.

Referring back to FIG. 11, the MME/SGSN may detect the congestion of one or more pair(s) of DCNs and APNs served by the MME/SGSN (S1101).

If one DCN is connected to a plurality of APNs, the MME/SGSN may detect the congestion situation of the DCN connected to specific APN. Furthermore, to the contrary, if a plurality of DCNs is connected to one APN, the MME/SGSN may detect the congestion situation of a specific DCN connected to the corresponding APN.

That is, the MME/SGSN that serves a plurality of pairs of DCNs and APNs may detect the congestion of one or more of the pairs of plurality of DCNs and APNs.

For example, the MME/SGSN may detect the congestion of a pair(s) of a DCN and an APN based on the following criteria.
- If a maximum number of EPS bearers activated for each pair of a DCN and an APN is a preset threshold or more (exceeds the preset threshold);
- If a maximum rate of EPS bearer activation for each pair of a DCN and an APN is a preset threshold or more (exceeds the preset threshold);
- If a maximum rate of mobility management (MM) signaling associated with a pair of a specific DCN and APN and device is a preset threshold or more (exceeds the preset threshold)
- Setting within network management

The MME/SGSN receives a NAS request message from the UE (S1102).

In this case, the NAS request message may include an APN or may not include an APN.

As described above, the NAS request message may include a session management (SM) request message and/or a mobility management (MM) request message.

For example, the SM request message may include a PDN Connectivity Request message, a Bearer Resource Allocation Request message and/or a Bearer Resource Modification Requests message.

Furthermore, the MM request message may include an Attach Request message, a Tracking Area Update Request message, a Service Request message and/or an Extended Service Request message.

The MME/SGSN obtains the subscription information/data of the UE from the HSS (S1103).

In this case, the subscription information may include a UE usage type. The UE usage type may be stored for each UE in the HSS.

Furthermore, the subscription information may include the default APN of the UE. That is, when APN information is not received from the UE in step S1102, the MME/SGSN may obtain the default APN information of the corresponding UE from the subscription information.

The MME/SGSN selects a pair of a DCN and an APN that serve the UE based on the UE usage type (S1104).

If the UE usage type of the corresponding UE is stored in the subscription information of the UE in the HSS, the UE may be served by a specific DCN.

In this case, UEs to which one (or more) UE usage types have been assigned may be served by one (or more) DCNs.

That is, the MME/SGSN may select a DCN based on the UE usage type. Furthermore, the MME/SGSN may select an APN based on the APN information received from the UE in step S1102 or the default APN information obtained from the HSS in step S1103.

If a pair of a DCN and an APN serving the UE is a pair of a DCN and an APN in which a congestion situation has been detected, the MME/SGSN transmits a NAS Reject message to the UE (S1105).

In this case, the NAS Reject message may include a backoff timer. Furthermore, the MME/SGSN may store the backoff time as UE context for each UE (or for each pair of a DCN and an APN per UE).

In this case, if a plurality of DCNs is served by the MME/SGSN, the MME/SGSN may independently determine backoff timer values for each pair of a DCN and an APN. Furthermore, in order to prevent a plurality of UEs served by the same pair of a DCN and an APN from initiating deferred NAS requests (almost) at the same time, the MME/SGSN may independently determine backoff timer values for each UE so that the deferred NAS requests are not synchronized.

The NAS Reject message may include a session management (SM) Reject message and/or a mobility management (MM) Reject message.

For example, the SM Reject message may include a PDN Connectivity Reject message, a Bearer Resource Allocation Reject message and/or a Bearer Resource Modification Reject message.

Furthermore, the MM Reject message may include an Attach Reject message, a Tracking Area Update Reject message and/or a Service Reject message.

The UE that has received the backoff timer from the MME/SGSN stores the backoff timer and may not initiate any NAS request for the same DCN and the same APN (i.e., a pair of a DCN and an APN serving the UE) until the backoff timer expires (e.g., a NAS request for a Detach procedure, high priority access, emergency services or mobile terminated services may be excluded).

Before a stored backoff time for a pair of a DCN and an APN of a UE expires, the MME/SGSN may immediately reject any next NAS request (e.g., a NAS request for a Detach procedure, high priority access, emergency services or mobile terminated services may be excluded) received with respect to the same DCN and the same APN (i.e., a pair of a DCN and an APN serving the UE) received from the corresponding UE.

Furthermore, if the MME/SGSN detects the congestion of a pair of a specific DCN and specific APN as in step S1101 while a UE is already served by the pair of specific DCN and APN, it may transmit a Detach Request message for the corresponding pair of DCN and APN to the UE.

When the UE receives the Detach Request message, it transmits a Detach Accept message as a response to the Detach Request message. After the Detach Accept message is transmitted, the existing NAS signaling connection for the corresponding pair of DCN and the APN of the corresponding UE may be released.

### 2) DCN specific RAN level congestion control method

Furthermore, RRC connection setup for a specific DCN type in a RAN level may be backed off. When the MME detects that congestion has occurred with respect to a specific UE usage type (i.e., DCN type), it may deprioritize services for the corresponding DCN. In this case, the MME may transmit the DCN type and/or UE usage type information that undergo the congestion to an eNB. The eNB may broadcast the corresponding UE usage type and/or DCN type (e.g., using system information, etc.). Furthermore, the eNB may instruct access to the UE usage type and/or DCN type to be barred for a specific time.

More specifically, a detailed operation of the present invention is described.
i) An access stratum (AS) (e.g., an AS module within a processor) may transmit a UE usage type and/or DCN Type read from system information and time information about access barring to the NAS. If a UE belongs to the corresponding UE usage type and/or DCN type, the NAS may not request RRC connection setup from the AS for a set time.
ii) Furthermore, if a non-access stratum (NAS) (e.g., an NAS module within a processor) requests RRC connection setup from the AS and provides notification along with a UE usage type and/or a DCN type, the AS may determine whether the corresponding UE usage type and/or DCN type are included in the access barring list of a serving cell. Furthermore, if the corresponding UE usage type and/or DCN type are included in the access barring list of the serving cell, the AS may not perform RRC connection setup for the corresponding request.

Meanwhile, the NAS may use/apply time information about the specific access barring provided by the AS in/to DCN specific NAS level congestion control for mobility management signaling or session management signaling. That is, the NAS may wait without performing RRC connection setup for a corresponding time using the time information received from the AS as a backoff timer.

The method proposed by the present invention relates to a method for an MME side to determine overload control based on assistance information received from a UE in addition to UE context information stored as a UE usage type or DCN type and for an eNB to control overload based on the overload start instructed by the MME.

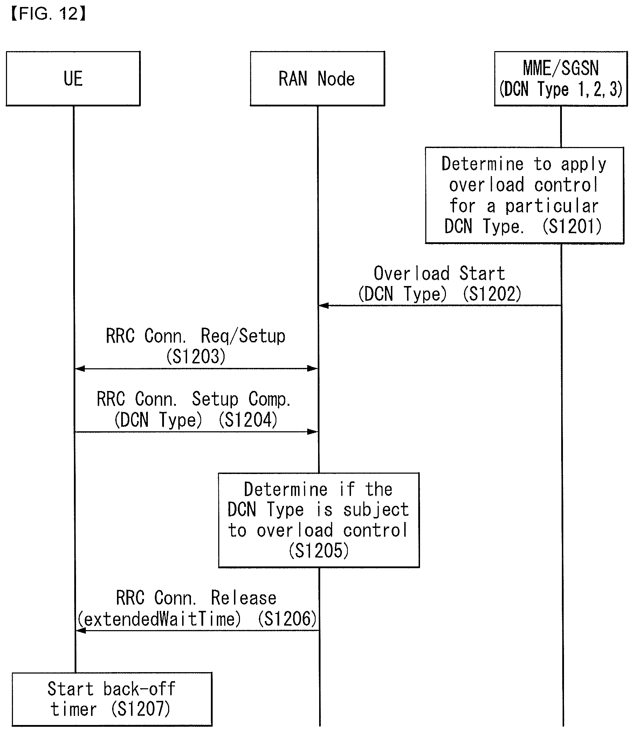

FIG. 12 illustrates a congestion control method for each DCN in a wireless communication system to which the present invention may be applied.

In FIG. 12, it is assumed that an MME/SGSN support different DCN types 1, 2, and 3.

Referring to FIG. 12, the MME/SGSN determines whether to apply overload control to a specific DCN type (S1201).

In accordance with the criteria described in FIG. 11, the MME/SGSN may determine whether to apply overload control to a specific DCN type.

If it is determined to apply overload control to the specific DCN type, the MME/SGSN transmits an overload start message for the corresponding DCN type to a RAN node (S1202).

In this case, the overload start message may include a DCN type.

A UE transmits an RRC Connection Request message to the RAN node, and the RAN node transmits an RRC connection setup message to the UE (S1203).

The UE transmits an RRC Connection Setup Complete message to the RAN node (S1204).

In this case, the RRC Connection Setup Complete message may include DCN type information.

The RAN node determines whether the received corresponding DCN type is an overload control target (S1205).

If the corresponding DCN type is an overload control target, the RAN node transmits an RRC Connection Release message to the UE (S1206).

In this case, the RRC Connection Release message may include WaitTime extended by the corresponding DCN type.

The UE drives a backoff timer for the corresponding DCN type (S1207).

Furthermore, the UE does not transmit an RRC Connection Request message to an eNB until the backoff timer expires.

That is, while the UE operates to set up an RRC connection for signaling/data transmission/reception, when an eNB transmits the RRC connection setup message, the UE transmits an RRC Connection Setup Complete message to the eNB as a response thereto. In this case, the UE may include DCN information/ID in an RRC Connection Setup Complete message and transmit the message.

If the eNB recognizes that overload control has started with respect to a DCN corresponding to the received DCN information/ID due to congestion and the UE includes the DCN information whose overload control has started in the RRC Connection Setup Complete message, the eNB backs off the corresponding UE as long as a wait time (i.e., extendedwaittime) by transmitting the wait time while it transmits an RRC Connection Release message to the corresponding UE.

For this, the present invention proposes the following operation.

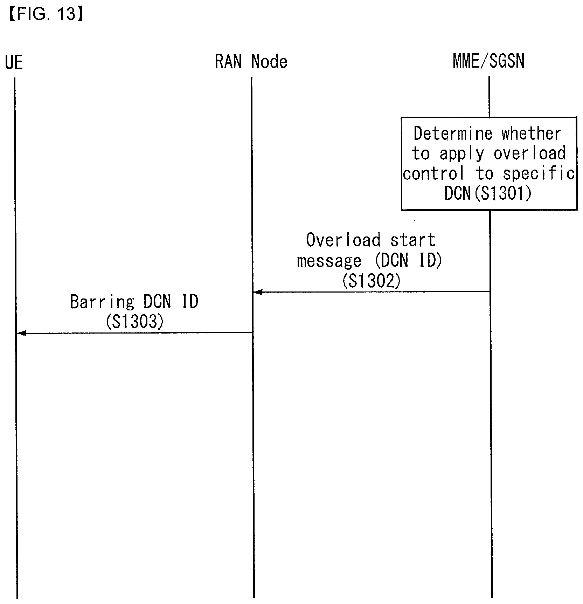

Proposal 1) FIG. 13 is a diagram illustrating a congestion control method according to an embodiment of the present invention.

Referring to FIG. 13, an MME/SGSN may determine whether to apply overload control to a specific DCN (S1301).

In accordance with the criteria described in FIG. 11, the MME/SGSN may determine whether to apply overload control to a specific DCN.

If it is determined to apply overload control to the specific DCN, the MME/SGSN may transmit an overload start message for the corresponding DCN to a RAN node (S1302).

In this case, the overload start message may include DCN information/identifier (ID).

If the overload start for a specific DCN is instructed by a core network (e.g., MME/SGSN) (i.e., when an overload start message is received), the RAN node (e.g., eNB) may broadcast (e.g., system information) DCN information/ID barred so that a UE does not perform RRC connection setup (i.e., so that the UE does not initiate an RRC Connection Establishment procedure) with respect to the corresponding DCN.

Thereafter, after the UE confirms that access to the specific DCN has been limited due to overload from a corresponding cell, the UE may not attempt access to the corresponding specific DCN through the corresponding cell for a specific time.

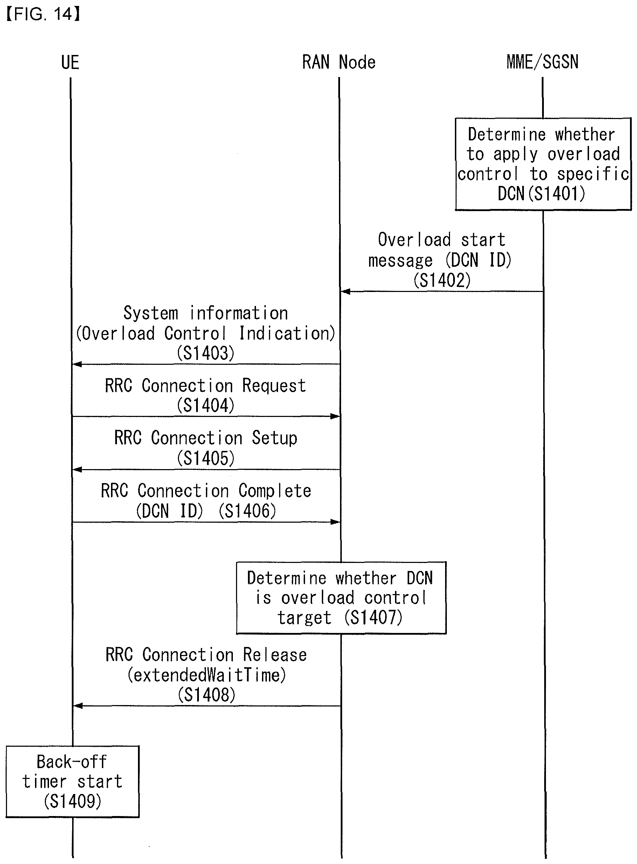

Proposal 2) FIG. 14 is a diagram illustrating a congestion control method according to an embodiment of the present invention.

Referring to FIG. 14, an MME/SGSN may determine whether to apply overload control to a specific DCN (S1401).

In accordance with the criteria described in FIG. 11, the MME/SGSN may determine whether to apply overload control to a specific DCN.

If it is determined to apply overload control to the specific DCN, the MME/SGSN may transmit an overload start message for the corresponding DCN to a RAN node (S1402).

In this case, the overload start message may include DCN information/ID.

When the RAN node (e.g., eNB) receives an instruction for the overload start for the specific DCN (i.e., when an overload start message is received) from a core network (e.g., MME/SGSN), the RAN node (e.g., eNB) may broadcast (e.g., system information) indication (i.e., overload control indication) providing notification that the overload control for the DCN has started (S1403).

As in FIG. 12, to include DCN assistance information for overload control in each RRC Connection Setup Complete message of a UE in the state in which the UE is unaware whether a network has started overload control is inefficient.

In order to improve this, the RAN node (e.g., eNB) may broadcast indication that provides notification that overload control for a (any) DCN has started as system information.

A UE transmits an RRC Connection Request message to the RAN node (S1404), and the RAN node may transmit an RRC connection setup message to the UE (S1405).

The UE may transmit an RRC Connection Setup Complete message, including DCN information/ID, to the RAN node (S1406).

That is, if the RAN node (e.g., eNB) has broadcasted information that provides notification that overload control for a DCN has started, the UE may include DCN information (i.e., DCN information/ID) whose service has been registered or wanted by the UE in the RRC Connection Setup Complete message.

The RAN node (e.g., eNB) may determine whether a DCN corresponding to the received DCN information/ID is an overload control target (S1407).

If the DCN corresponding to the received DCN information/ID is an overload control target, the RAN node (e.g., eNB) may transmit an RRC Connection Release message to the UE (S1408).

In this case, the RRC Connection Release message may include an extended WaitTime for the corresponding DCN.

The UE drives a backoff timer with respect to the corresponding DCN (S1409).

Furthermore, the UE may not transmit an RRC Connection Request message for the corresponding DCN to the eNB until the backoff timer expires.

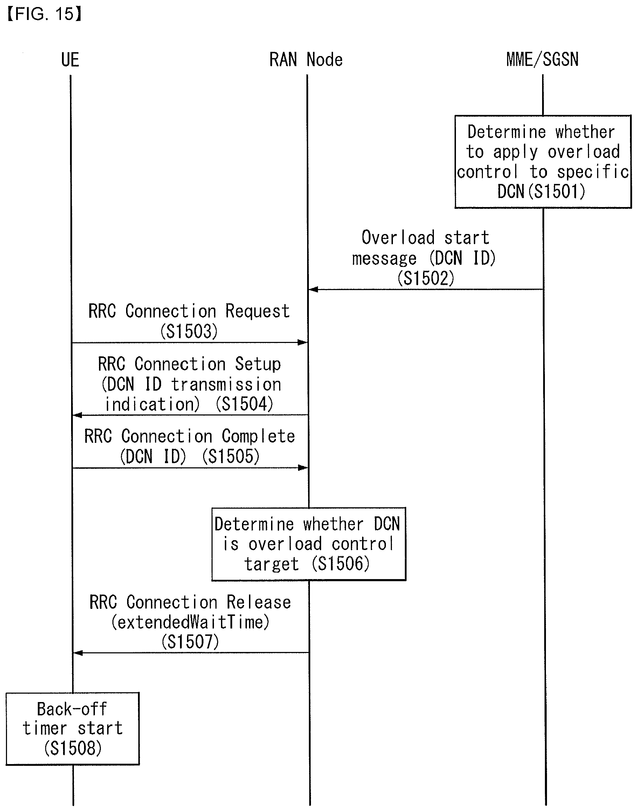

Proposal 3) FIG. 15 is a diagram illustrating a congestion control method according to an embodiment of the present invention.

Referring to FIG. 15, an MME/SGSN may determine whether to apply overload control to a specific DCN (S1501).

In accordance with the criteria described in FIG. 11, the MME/SGSN may determine whether to apply overload control to a specific DCN.

If it is determined to apply overload control to the specific DCN, the MME/SGSN may transmit an overload start message for the corresponding DCN to a RAN node (S1502).

In this case, the overload start message may include DCN information/ID.

A UE may transmit an RRC Connection Request message to the RAN node (S1503).

The RAN node may transmit an RRC connection setup message, including indication indicative of DCN information/ID transmission, to the UE (S1504).

That is, as in the previous embodiment, the exposure of overload information or DCN information as system information may not be preferred. In order to improve this, when the RAN node (e.g., eNB) receives an instruction for overload control for a specific DCN from a connected core network (e.g., MME/SGSN) and when it receives an RRC Connection Request message from a specific UE, it may indicate whether the UE will include DCN information/ID in an RRC connection setup message.

When the UE receives indication indicating that the DCN information/ID needs to be included in the received RRC connection setup message, the UE may transmit an RRC Connection Setup Complete message, including the DCN information/ID, to the RAN node (S1505).

The RAN node (e.g., eNB) may determine whether a DCN corresponding to the received DCN information/ID is an overload control target (S1506).

If the DCN corresponding to the received DCN information/ID is an overload control target, the RAN node (e.g., eNB) may transmit an RRC Connection Release message to the UE (S1507).

In this case, the RRC Connection Release message may include an extended WaitTime for the corresponding DCN.

The UE drives a backoff timer with respect to the corresponding DCN (S1508).

Furthermore, the UE may not transmit an RRC Connection Request message for the corresponding DCN to the eNB until the backoff timer expires.

### Overview of devices to which the present invention can be applied

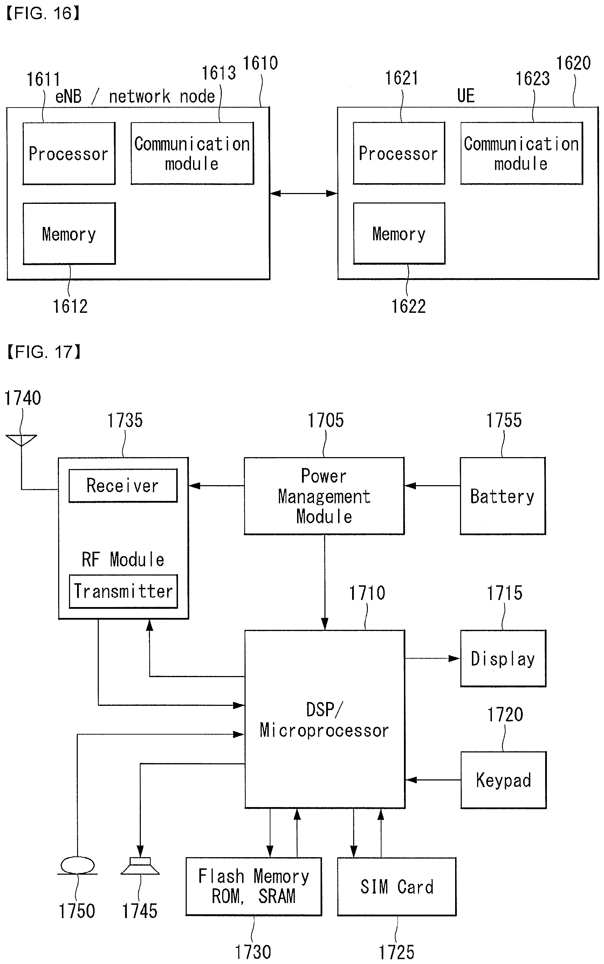

FIG. 16 illustrates a block diagram of a communication device according to one embodiment of the present invention.

With reference to FIG. 16, a wireless communication system comprises a network node 1610 and a plurality of UEs 1620.

A network node 1610 comprises a processor 1611, memory 1612, and communication module 1613. The processor 1611 implements proposed functions, processes and/or methods proposed through FIG. 1 to FIG. 15. The processor 1611 can implement layers of wired/wireless interface protocol. The memory 1612, being connected to the processor 1611, stores various types of information for driving the processor 1611. The communication module 1613, being connected to the processor 1611, transmits and/or receives wired/wireless signals. Examples of the network node 1610 include an eNB, MME/SGSN, HSS, SGW, PGW, application server and so on. In particular, in case the network node 1610 is an eNB, the communication module 1613 can include a Radio Frequency (RF) unit for transmitting/receiving a radio signal.

The UE 1620 comprises a processor 1621, memory 1622, and communication module (or RF unit) 1623. The processor 1621 implements proposed functions, processes and/or methods proposed through FIG. 1 to FIG. 15. The processor 1621 can implement layers of wired/wireless interface protocol. The memory 1622, being connected to the processor 1621, stores various types of information for driving the processor 1621. The communication module 1623, being connected to the processor 1621, transmits and/or receives wired/wireless signals.

The memory 1612, 1622 can be installed inside or outside the processor 1611, 1621 and can be connected to the processor 1611, 1621 through various well-known means. Also, the network node 1610 (in the case of an eNB) and/or the UE 1620 can have a single antenna or multiple antennas.

FIG. 17 illustrates a block diagram of a wireless communication apparatus according to an embodiment of the present invention.

Particularly, in Fig. 17, the UE described above Fig. 16 will be exemplified in more detail.

Referring to Fig. 17, the UE includes a processor (or digital signal processor) 1710, RF module (RF unit) 1735, power management module 1705, antenna 1740, battery 1755, display 1715, keypad 1720, memory 1730, Subscriber Identification Module (SIM) card 1725 (which may be optional), speaker 1745 and microphone 1750. The UE may include a single antenna or multiple antennas.

The processor 1710 may be configured to implement the functions, procedures and/or methods proposed by the present invention as described in FIG. 1-15. Layers of a wireless interface protocol may be implemented by the processor 1710.

The memory 1730 is connected to the processor 1710 and stores information related to operations of the processor 1710. The memory 1730 may be located inside or outside the processor 1710 and may be connected to the processors 1710 through various well-known means.

A user enters instructional information, such as a telephone number, for example, by pushing the buttons of a keypad 1720 or by voice activation using the microphone 1750. The microprocessor 1710 receives and processes the instructional information to perform the appropriate function, such as to dial the telephone number. Operational data may be retrieved from the SIM card 1725 or the memory module 1730 to perform the function. Furthermore, the processor 1710 may display the instructional and operational information on the display 1715 for the user's reference and convenience.

The RF module 1735 is connected to the processor 1710, transmits and/or receives an RF signal. The processor 1710 issues instructional information to the RF module 1735, to initiate communication, for example, transmits radio signals comprising voice communication data. The RF module 1735 comprises a receiver and a transmitter to receive and transmit radio signals. An antenna 1740 facilitates the transmission and reception of radio signals. Upon receiving radio signals, the RF module 1735 may forward and convert the signals to baseband frequency for processing by the processor 1710. The processed signals would be transformed into audible or readable information outputted via the speaker 1745.

The aforementioned embodiments are achieved by combination of structural elements and features of the present invention in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment. Moreover, it will be apparent that some claims referring to specific claims may be combined with another claims referring to the other claims other than the specific claims to constitute the embodiment or add new claims by means of amendment after the application is filed.

The embodiments of the present invention may be achieved by various means, for example, hardware, firmware, software, or a combination thereof. In a hardware configuration, the methods according to the embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present invention may be implemented in the form of a module, a procedure, a function, etc. Software code may be stored in a memory unit and executed by a processor. The memory unit may be located at the interior or exterior of the processor and may transmit data to and receive data from the processor via various known means.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### [Industrial Applicability]

The present invention is applied to a 3GPP LTE/LTE-A system is primarily described, but can be applied to various wireless communication systems in addition to the 3GPP LTE/LTE-A system.

## Claims

1. A method for a network node to perform congestion control in a wireless communication system, the method comprising:
detecting a congestion of one or more dedicated core networks (DCNs) served by the network node;
receiving a non-access stratum (NAS) request message from a user equipment (UE);
obtaining subscription information including a UE usage type of the UE from a home subscriber server (HSS);
selecting a DCN serving the UE based on the UE usage type; and
transmitting a NAS reject message including a backoff timer of the selected DCN to the UE as a response to the NAS request message when the DCN serving the UE is a DCN whose congestion has been detected.

2. The method of claim 1, wherein when a plurality of DCNs is served by the network node, the backoff timer is independently determined for each DCN.

3. The method of claim 1, wherein when the congestion situation is detected for each APN connected to the DCN and when a DCN and an APN serving the UE are a DCN and an APN in which a congestion situation has been detected, a backoff timer of the DCN and the APN serving the UE is transmitted to the UE.

4. The method of claim 3, further comprising transmitting a detach request message including the backoff timer of the DCN and the APN serving the UE to the UE when the UE is connected to an APN through a DCN and when the DCN and the APN serving the UE are a DCN and an APN in which the congestion situation has been detected.

5. The method of claim 3, wherein the NAS Reject message includes a different rejection cause for each DCN and APN or includes a common rejection cause used for all of DCNs and APNs.

6. The method of claim 1, wherein any NAS request message for the DCN serving the UE is not transmitted by the UE until the backoff timer expires.

7. The method of claim 1, further comprising immediately transmitting the NAS reject message when a NAS request message for a DCN serving the UE is received from the UE before the backoff timer expires.

8. The method of claim 1, wherein the NAS request message includes a session management request message and/or a mobility management request message.

9. A network node for performing congestion control in a wireless communication system, the network node comprising:
a communication module for transmitting/receiving a signal; and
a processor controlling the communication module, wherein the processor is configured to:
detect a congestion of one or more dedicated core networks (DCNs) served by the network node,
receive a non-access stratum (NAS) request message from a user equipment (UE),
obtain subscription information including a UE usage type of the UE from a home subscriber server (HSS),
select a DCN serving the UE based on the UE usage type, and
transmit a NAS reject message including a backoff timer of the selected DCN to the UE as a response to the NAS request message when the DCN serving the UE is a DCN whose congestion has been detected.

10. The network node of claim 9, wherein when a plurality of DCNs is served by the network node, the backoff timer is independently determined for each DCN.

11. The network node of claim 9, wherein when the congestion situation is detected for each APN connected to the DCN and when a DCN and an APN serving the UE are a DCN and an APN in which a congestion situation has been detected, a backoff timer of the DCN and the APN serving the UE is transmitted to the UE.

12. The network node of claim 11, wherein the processor transmits a detach request message including the backoff timer of the DCN and the APN serving the UE to the UE when the UE is connected to an APN through the a DCN and when the DCN and the APN serving the UE are a DCN and an APN in which the congestion situation has been detected.
